# EUROPEAN PATENT APPLICATION

(11) **EP 4 462 706 A1**
(43) Date of publication of application: **13.11.2024**
(21) Application number: 23737315.4
(22) Date of filing: 06.01.2023
(51) Int. Cl.: H04L 1/16, H04L 1/00

(54) **COMMUNICATION DEVICE, COMMUNICATION SYSTEM, AND COMMUNICATION METHOD**

(30) Priority: 06.01.2022 US 202263296967 P
(71) Applicant: Sony Semiconductor Solutions Corporation, Atsugi-shi, Kanagawa 243-0014 (JP)
(72) Inventor: YAMADA Junya, Atsugi-shi, Kanagawa 243-0014 (JP); HYAKUDAI Toshihisa, Paramus, New Jersey 07652 (US); OTA Satoshi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/000204
(87) International publication number: WO 2023/132367

(57) **Abstract**

To solve a problem related to error correction.

A communication device includes: a PHY that receives a first transmission signal conforming to a predetermined communication protocol from a communication partner device and performs error correction on a plurality of first packets included in the first transmission signal; and a LINK that separates the plurality of first packets after error correction and generates a second packet including error correction impossible information of a first packet on which error correction cannot be correctly performed, in which the PHY transmits a second transmission signal including the second packet to the communication partner device.

## Description

### TECHNICAL FIELD

The present disclosure relates to a communication device, a communication system, and a communication method.

### BACKGROUND ART

A technique for establishing high-speed serial communication among a plurality of devices has been proposed (Patent Document 1). This type of high-speed serial communication is used in various fields, and is used for communication between in-vehicle devices, for example.

### CITATION LIST

### PATENT DOCUMENT

Patent Document 1: Japanese Patent Application Laid-Open No. 2011-239011

### SUMMARY OF THE INVENTION

### PROBLEMS TO BE SOLVED BY THE INVENTION

With the development of automated driving technology and electronic technology, there is an increasing need for high-speed communication between in-vehicle devices. Automotive SerDes Alliance (ASA) assumes that time division duplex (TDD: Time Division Duplexing) communication is performed between a Root device and a Leaf device connected to a cable.

In the ASA standard Spec V1.01, there is a problem in that in a case where error correction cannot be correctly performed on a packet transmitted from a Root device to a Leaf device in the Leaf device, the Root device cannot know the fact.

Therefore, the present disclosure provides a communication device, a communication system, and a communication method that can solve a problem related to error correction.

### SOLUTIONS TO PROBLEMS

In order to solve the above problem, according to the present disclosure, provided is a communication device that includes:
a PHY that receives a first transmission signal conforming to a predetermined communication protocol from a communication partner device and performs error correction on a plurality of first packets included in the first transmission signal; and
a LINK that separates the plurality of first packets after error correction and generates a second packet including error correction impossible information of a first packet on which error correction cannot be correctly performed, in which the PHY transmits a second transmission signal including the second packet to the communication partner device.

The plurality of first packets may include at least one of an application packet or a first operation, administration, and maintenance (OAM) packet, and
the second packet may include a second OAM packet.

The LINK may include a register that stores the error correction impossible information, and
the first OAM packet may include address information of the register in which the error correction impossible information is stored.

The second OAM packet may include a header and a payload, and
the payload of the second OAM packet may include the error correction impossible information.

The error correction impossible information may include reception time information of an application packet on which error correction cannot be performed first in a transmission unit of the transmission signal and total number information of application packets on which error correction cannot be performed in the transmission unit, and
the address information in the first OAM packet may include first address information designating the reception time information in the register and second address information designating the total number information in the register.

The error correction impossible information may include reception time information of first n (n is an integer of 1 or more) application packets on which error correction cannot be performed in a transmission unit of the transmission signal and total number information of application packets on which error correction cannot be performed in the transmission unit, and
the address information in the first OAM packet may include the n pieces of first address information designating the n pieces of reception time information in the register and second address information designating the total number information in the register.

The error correction impossible information may include reception time information of an application packet on which error correction cannot be performed first in a transmission unit of the transmission signal, total number information of application packets on which error correction cannot be performed in the transmission unit, identification information of an application packet on which error correction cannot be performed first in the transmission unit of the transmission signal, and bit string information in which whether or not error correction cannot be performed is allocated to each application packet in units of bits, the application packet being transmitted in the transmission unit, and
the address information in the first OAM packet may include: first address information designating the reception time information in the register; second address information designating the total number information in the register; third address information designating the identification information in the register; and fourth address information designating the bit string information in the register.

The LINK may include an OAM unit that decodes the first OAM packet and generates the second OAM packet,
the first OAM packet may include an error detection code, and
the PHY may detect an error in the first OAM packet on the basis of the error detection code and may output an error detection signal.

The communication device may further include a number storage unit that stores a number of times an error of the first OAM packet is detected by the OAM unit for each transmission unit of the transmission signal, and
the second OAM packet may include information of the number of times stored in the number storage unit.

The second OAM packet may include the error correction impossible information read from the number storage unit on the basis of the address information.

The second OAM packet may include the error correction impossible information.

The second OAM packet may include a header and a payload,
the payload of the second OAM packet may include the error correction impossible information, and
the payload of the second OAM packet may have a byte length according to an amount of the error correction impossible information.

The second OAM packet may include a header and a payload, and
a length of the header of the second OAM packet may be different between a case of including the error correction impossible information and a case of not including the error correction impossible information.

The second OAM packet may be transmitted to the communication partner device as a response to the first OAM packet from the communication partner device.

The second OAM packet may be transmitted to the communication partner device each time the PHY determines that error correction of the first packet is impossible.

The plurality of first packets may include at least one of an I2C packet, an SPI packet, or a GPIO packet.

Information may be alternately transmitted and received to and from the communication partner device within a period allocated by a time division duplex (TDD) communication method.

According to the present disclosure, provided is a communication device that includes:
a LINK that generates a transmission packet including a plurality of first packets; and
a PHY that generates a first transmission signal conforming to a predetermined communication protocol on the basis of the transmission packet, transmits the first transmission signal to a communication partner device, and receives a second transmission signal from the communication partner device, in which
the LINK restores a second packet on the basis of the second transmission signal,
the plurality of first packets includes at least one of an application packet or a first operation, administration, and maintenance (OAM) packet, and
the second packet includes error correction impossible information of the first packet on which the communication partner device cannot correctly perform error correction.

According to the present disclosure, provided is a communication system that includes:
a first communication device; and
a second communication device that alternately transmits and receives information to and from the first communication device within a period allocated by a time division duplex (TDD) communication method, in which
the first communication device includes:
   a first LINK that generates a first transmission packet including a plurality of first packets; and
   a first PHY that generates a first transmission signal conforming to a predetermined communication protocol on the basis of the first transmission packet, transmits the first transmission signal to the second communication device, and receives a second transmission signal from the second communication device,
   the second communication device includes:
      a second PHY that receives the first transmission signal conforming to the communication protocol from the first communication device and performs error correction on a plurality of first packets included in the first transmission signal; and
      a second LINK that separates the plurality of first packets after error correction and generates a second packet including error correction impossible information of a first packet on which error correction cannot be correctly performed, and
      the second PHY transmits the second transmission signal including the second packet to the first communication device.

A communication method, including:
receiving a first transmission signal conforming to a predetermined communication protocol from a communication partner device and performing error correction on a plurality of first packets included in the first transmission signal;
separating the plurality of first packets after error correction and generating a second packet including error correction impossible information of a first packet on which error correction cannot be correctly performed; and
transmitting a second transmission signal including the second packet to the communication partner device.

### BRIEF DESCRIPTION OF DRAWINGS

Fig. 1 is a block diagram illustrating a basic configuration of a communication system according to the present disclosure.
Fig. 2 is a block diagram illustrating an internal configuration of a Root device.
Fig. 3 is a block diagram illustrating an internal configuration of a Leaf device.
Fig. 4A is a diagram illustrating a hierarchical structure of an application packet transmitted and received between the Root device and the Leaf device.
Fig. 4B is a diagram illustrating a hierarchical structure of an OAM packet transmitted and received between the Root device and the Leaf device.
Fig. 5 is a diagram illustrating a processing operation when an application packet is transmitted and received in the communication system in Fig. 1.
Fig. 6 is a diagram illustrating a processing operation when an OAM packet is transmitted and received in the communication system in Fig. 1.
Fig. 7 is a diagram illustrating a transmission schedule between the Root device located in node1 and the Leaf device located in node2.
Fig. 8 is a diagram illustrating transmission timings of a plurality of packets to be transmitted and received by the Root device located in the node1 and the Leaf device located in the node2 according to the transmission schedule in Fig. 7.
Fig. 9 is a diagram illustrating a problem when an OAM packet of Uplink#3 in Fig. 8 is transmitted from the node1 to the node2.
Fig. 10 is a diagram illustrating an example in which an error on which error correction cannot be performed is included in a payload of a transmission signal received by PhyL of the node2.
Fig. 11 is a diagram illustrating timings at which the Root device located in the node1 and the Leaf device located in the node2 transmit and receive an application packet and an OAM packet.
Fig. 12 is a diagram illustrating a configuration of an OAM packet according to a first embodiment.
Fig. 13 is a block diagram illustrating an internal configuration of the Root device according to the first embodiment.
Fig. 14 is a block diagram illustrating an internal configuration of the Leaf device according to the first embodiment.
Fig. 15A is a diagram illustrating a second example for solving a first problem illustrated in Figs. 9 and 10.
Fig. 15B is a diagram illustrating a first configuration example of an extended OAM header.
Fig. 16 is a diagram illustrating a relationship between a normal OAM header and the extended OAM header.
Fig. 17 is a diagram illustrating an example in which an FEC error occurs.
Fig. 18 is a diagram illustrating a first example for solving a second problem.
Fig. 19 is a diagram illustrating a second example for solving the second problem.
Fig. 20 is a diagram illustrating a third example for solving the second problem.
Fig. 21 is a diagram illustrating a fourth example for solving the second problem.
Fig. 22 is a diagram illustrating a fifth example for solving the second problem.
Fig. 23 is a diagram illustrating timings of a communication system according to a third embodiment.
Fig. 24 is a diagram illustrating a second configuration example of the extended OAM header.
Fig. 25 is a diagram illustrating an example in which FEC Error Application ID and FEC Error Application Status are included in the extended OAM header of Fig. 24.
Fig. 26 is a timing chart of a communication system according to the fourth embodiment.
Fig. 27 is a diagram illustrating a transmission schedule in which an allocation of Downlink#2 from GPIO to OAM is changed.
Fig. 28 is a diagram illustrating a configuration of an extended OAM header of an OAM return.
Fig. 29 is a timing chart in a case where FEC error information is included in an OAM payload of the OAM return.

### MODE FOR CARRYING OUT THE INVENTION

Hereinafter, embodiments of a communication device, a communication system, and a communication method will be described with reference to the drawings. Although main components of the communication device and the communication system will be mainly described below, the communication device and the communication system may have components and functions that are not illustrated or described. The following description does not exclude components and functions that are not depicted or described.

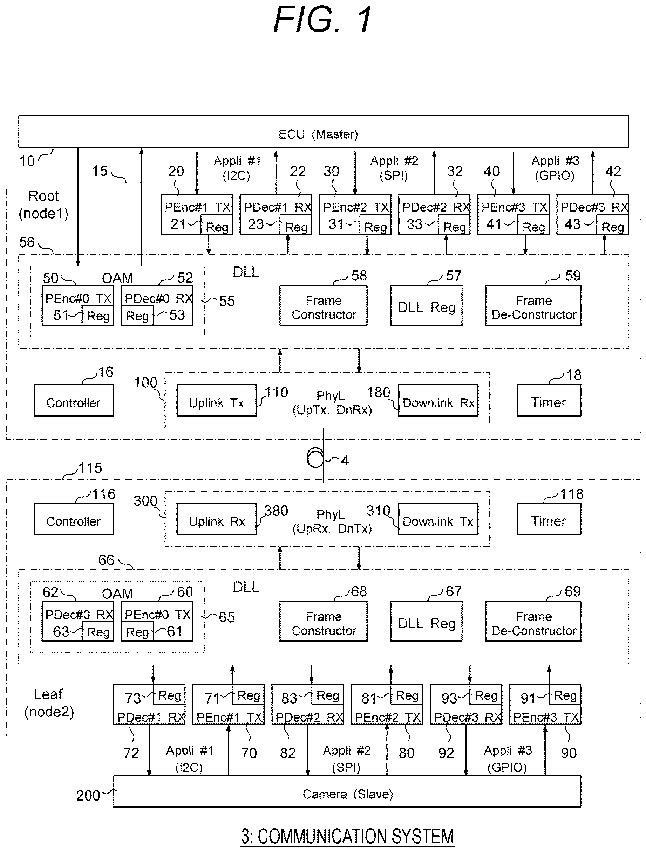

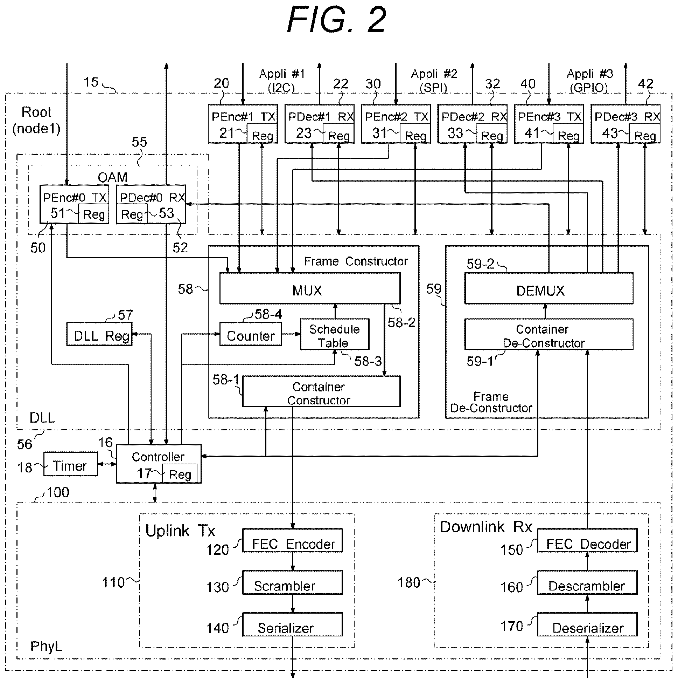

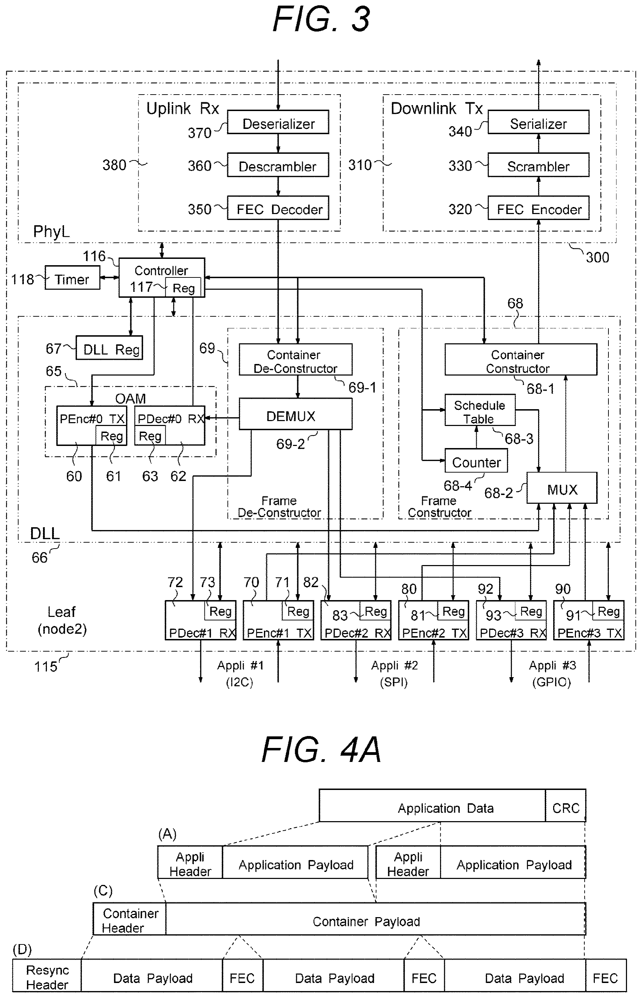

First, a basic configuration and operation of a communication device and a communication system according to the present disclosure will be described. Fig. 1 is a block diagram illustrating a basic configuration of a communication system (3) according to the present disclosure. The communication system (3) in Fig. 1 includes a Root device (15) and a Leaf device (115). Fig. 2 is a block diagram illustrating an internal configuration of the Root device (15), and Fig. 3 is a block diagram illustrating an internal configuration of the Leaf device (115). The Root device (15) and the Leaf device (115) are connected by a cable (4) and can perform high-speed serial communication.

The Root device (15) and the Leaf device (115) perform TDD communication in compliance with the ASA. In the present specification, a path for transmitting information transmitted from the Root device (15) to the Leaf device (115) is referred to as Uplink, and a path for transmitting information transmitted from the Leaf device (115) to the Root device (15) is referred to as Downlink. Uplink and Downlink are virtually provided in the same cable (4). The following describes an example in which the Root device (15) is located in node1 and the Leaf device (115) is located in node2.

The Root device (15) includes an ECU (10), a packet encoder PEnc#1 (20) and a packet decoder PDec#1 (22) for internet integrated circuit (I2C), a packet encoder PEnc#2 (30) and a packet decoder PDec#2 (32) for SPI, a packet encoder PEnc#3 (40) and a packet decoder PDec#3 (42) for GPIO, a DLL (56), a PhyL (100), a controller (16), and a timer (18).

The ECU (10) is an example of a Master device. The ECU (10) controls the entire system and simultaneously receives and processes an application signal such as a video signal transmitted from the Leaf device (115). The ECU (10) generates a control signal for controlling each unit.

The PEnc#1 (20), the PEnc#2 (30), and the PEnc#3 (40) perform encoding processing of encapsulating the control signal from the ECU (10). The PDec#1 (22), the PDec#2 (32), and the PDec#3 (42) perform decoding processing of decoding the encapsulated application packet from the Leaf device (115) into an original application signal.

The DLL (56) generates an Uplink packet including one or more application packets encapsulated by the PEnc#1 (20), the PEnc#2 (30), and the PEnc#3 (40), extracts one or more application packets included in a Downlink packet transmitted from the Leaf device (115), and sends the one or more application packets to the corresponding packet decoder PDec.

The PHYL (100) outputs a transmission signal including the Uplink packet generated by the DLL (56) to the cable (4) at the timing of TDD, receives a signal including the Downlink packet sent from the Leaf device (115) to the cable (4), and sends the received Downlink packet to the DLL (56).

The controller (16) controls each unit in the Root device (15). The timer (18) is used to synchronize with the Leaf device (115).

An example in which the Root device (15) in Fig. 1 transmits an application packet including an I2C packet, an SPI packet, and a GPIO packet to the Leaf device (115) will be described, but the application packet may include a packet other than the above-described packets.

The DLL (56) includes a frame constructor (58), a frame de-constructor (59), a DLL register (57), and an OAM unit (55).

The frame constructor (58) integrates a plurality of application packets and OAM packets to generate an Uplink packet. The frame de-constructor (59) decomposes a Downlink packet from the Leaf device (115) into a plurality of application packets. The DLL register (57) records error correction impossible information and the like as described later.

The OAM unit (55) includes a PEnc#0 (50) that encodes an OAM packet provided separately from an application packet, and a PDec#0 (52) that decodes the OAM packet.

The PhyL (100) includes an Uplink Tx (110) that transmits an Uplink packet and a Downlink Rx (180) that receives a Downlink packet.

The Leaf device (115) includes a Camera (200), a PEnc#1 (70) and a PDec#1 (72) for internet integrated circuit (I2C), a PEnc#2 (80) and a PDec#2 (82) for SPI, a PEnc#3 (90) and a PDec#3 (92) for GPIO, a DLL (66), a PhyL (300), a controller (116), and a timer (118).

The Camera (200) is an example of a Slave device. The Camera (200) receives and processes a control signal transmitted from the Root device (15) in addition to output of image data. The Camera (200) transmits and receives I2C packets, SPI packets, and GPIO packets to and from the Leaf device (115).

The PEnc#1 (70), the PEnc#2 (80), and the PEnc#3 (90) perform encoding processing of encapsulating the control signal from the Camera (200). The PDec#1 (72), the PDec#2 (82), and the PDec#3 (92) perform decoding processing of decoding the encapsulated application packet from the Root device (15) into an original application signal.

The DLL (66) generates a Downlink packet including one or more application packets encapsulated by the PEnc#1 (70), the PEnc#2 (80), and the PEnc#3 (90), extracts one or more application packets included in the Uplink packet transmitted from the Root device (15), and sends the one or more application packets to the PDec#1 (72), the PDec#2 (82), and the PDec#3 (92).

The PHYL (300) outputs a signal including the Downlink packet generated by the DLL (66) to the cable (4) at the timing of TDD, receives a signal including the Uplink packet sent from the Root device (15) to the cable (4), and sends the received Uplink packet to the DLL (66).

The controller (116) controls each unit in the Leaf device (115). The timer (118) is used to synchronize with the Root device (15).

The DLL (66) includes a frame constructor (68), a frame de-constructor (69), a DLL register (67), and an OAM unit (65).

The frame constructor (68) integrates a plurality of application packets and OAM packets to generate a Downlink packet. The frame de-constructor (69) decomposes an Uplink packet from the Root device (15) into a plurality of application packets. The DLL register (67) records error correction impossible information as described later.

The OAM unit (65) includes a PEnc#0 (60) that encodes an OAM packet provided separately from an application packet, and a PDec#0 (62) that decodes the OAM packet.

The PhyL (300) includes a Downlink Tx (310) that transmits a Downlink packet and an Uplink Rx (380) that receives an Uplink packet.

Fig. 4A is a diagram illustrating a hierarchical structure of an application packet transmitted and received between the Root device (15) and the Leaf device (115).

An application signal input to and output from the ECU (10) or the Camera (200) includes application data and a cyclic redundancy check (CRC), which is an error detection code.

As illustrated in Fig. 4A (A), the application packet input to and output from the packet encoder PEnc or the packet decoder PDec includes an application header and an application payload.

An Uplink packet or a Downlink packet input to and output from the DLLs (56) and (66) is also referred to as a container, and includes a container header and a container payload as illustrated in Fig. 4A (C). The container payload includes one or more application packets.

A transmission signal input to and output from the PhyLs (100) and (300) includes a Resync header and a plurality of data payloads as illustrated in Fig. 4A (D). A forward error correction (FEC) code is added to the end of each data payload.

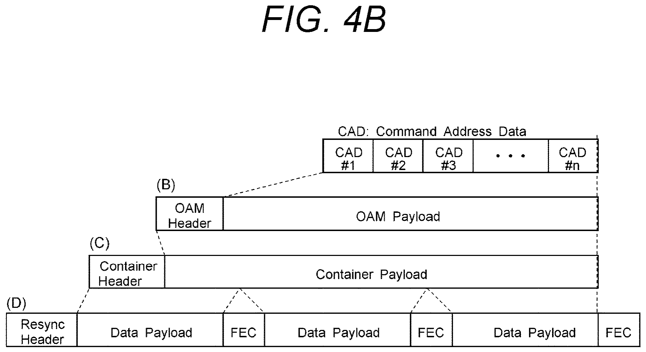

Fig. 4B is a diagram illustrating a hierarchical structure of an OAM packet transmitted and received between the Root device (15) and the Leaf device (115).

The OAM packet is generated by the OAM units (55) and (65) of the DLLs (56) and (66), respectively. The OAM units (55) and (65) include one or more CAD (Command, Address, Data) including a command, an address, and data. In the basic configuration of the OAM packet, an error detection code such as CRC is not added to CAD.

As illustrated in Fig. 4B (B), the OAM packet includes an OAM header and an OAM payload.

An Uplink packet or a Downlink packet input to and output from the DLLs (56) and (60) includes a container header and a container payload as illustrated in Fig. 4B (C), and the container payload includes an OAM packet.

A transmission signal input to and output from the PhyLs (100) and (300) includes a Resync header and a plurality of data payloads as illustrated in Fig. 4B (D), and the data payload includes an OAM packet.

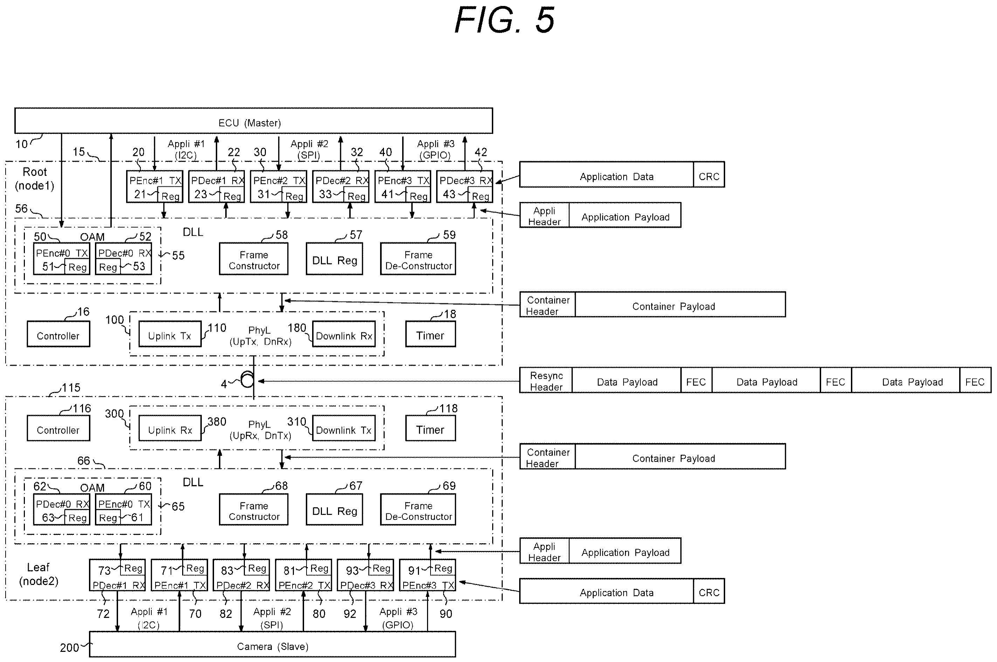

Fig. 5 is a diagram illustrating a processing operation when an application packet is transmitted and received in the communication system (3) in Fig. 1. The Root device (15) and the Leaf device (115) includes a packet encoder PEnc and a packet decoder PDec for each application. The packet encoder PEnc generates an application packet on the basis of application data from the corresponding application. The packet decoder PDec restores the application data from the application packets output from the DLLs (56) and (66).

Fig. 5 illustrates an example in which I2C, SPI, and GPIO are used as applications. In the example in Fig. 5, the packet encoders PEnc#1 (20, 70) and the packet decoders PDec#1 (22, 72) are used for packet conversion for I2C. The packet encoders PEnc#2 (30, 80) and the packet decoders PDec#2 (32, 82) are used for packet conversion for SPI. The packet encoders PEnc#3 (40, 90) and the packet decoders PDec#3 (42, 92) are used for packet conversion for GPIO.

Each packet encoder PEnc generates an application packet (Fig. 4A (A)) for each application and transmits the application packet to the DLLs (56) and (66). Each packet encoder PDec restores the original application data from the application packets (Fig. 4A (A)) output from the DLLs (56) and (66). When restoring the original application data from the application packet (Fig. 4A (A)), each packet decoder PDec can detect whether or not there is an error in the received application packet on the basis of the CRC included in the application payload.

The DLLs (56) and (66) generate a container (Fig. 4A (C)) in which the application packets (Fig. 4A (A)) received from the respective packet encoder PEnc are integrated, and transmit the container to the PhyLs (100) and (300). Furthermore, the DLLs (56) and (66) extract the application packet (Fig. 4A (A)) for each application from the container (Fig. 4A (C)) received by the PhyLs (100) and (300), and transmits the application packet to the corresponding PDec.

The PhyLs (100) and (300) converts the container (Fig. 4A (C)) output from the DLLs (56) and (66) into the PHY format (Fig. 4A (D)) of the ASA, and transmits the PHY format to the Leaf device (115) or the Root device (15) as a communication partner device.

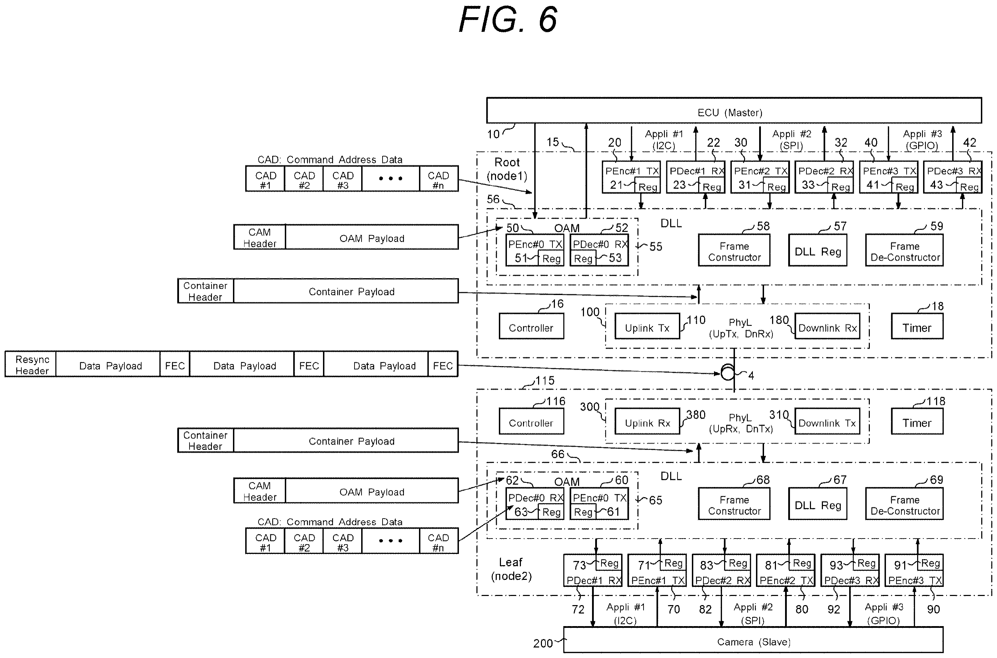

Fig. 6 is a diagram illustrating a processing operation when an OAM packet is transmitted and received in the communication system (3) in Fig. 1. The ECU (10) can transmit and receive an OAM packet between the Root device (15) and the Leaf device (115). In the example in Fig. 6, the packet encoders PEnc#0 (50) and (60) are used to generate the OAM packet, and the packet decoders PDec#0 (52) and (62) are used to decode the OAM packet into the original CAD (Command, Address, Data).

The packet encoders PEnc#0 (50) and (60) generate the OAM packet (Fig. 4B (B)) and transmit the OAM packet to the DLLs (56) and (66). The packet decoders PDec#0 (52) and (62) restore the original CAD from the OAM packets (Fig. 4B (B)) output from the DLLs (56) and (66).

When the packet decoders PDec#0 (52) (62) restores the original CAD from the OAM packet (Fig. 4B (B)), since the payload of the OAM packet does not include an error detection code such as CRC, the error detection of the received OAM packet cannot be performed.

The DLLs (56) and (66) incorporate the OAM packets (Fig. 4B (B)) output from the packet encoders PEnc#0 (50) and (60) into the container (Fig. 4B (C)), and transmit the OAM packet to the PhyLs (100) and (300). Furthermore, the OAM packet (Fig. 4B (B)) is extracted from the container (Fig. 4B (C)) output from the PhyLs (100) and (300), and the OAM packet (Fig. 4B (B)) is transmitted to the corresponding packet decoders PDec#0 (52) and (62).

The PhyLs (100) and (300) converts the container (Fig. 4B (C)) output from the DLLs (56) and (66) into the PHY format (Fig. 4B (D)) of the ASA, and transmits the PHY format to the Leaf device (115) or the Root device (15) as a communication partner device.

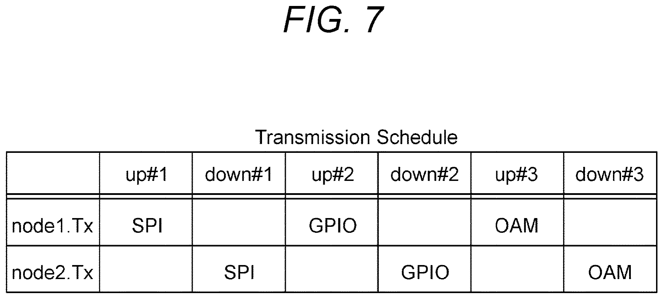

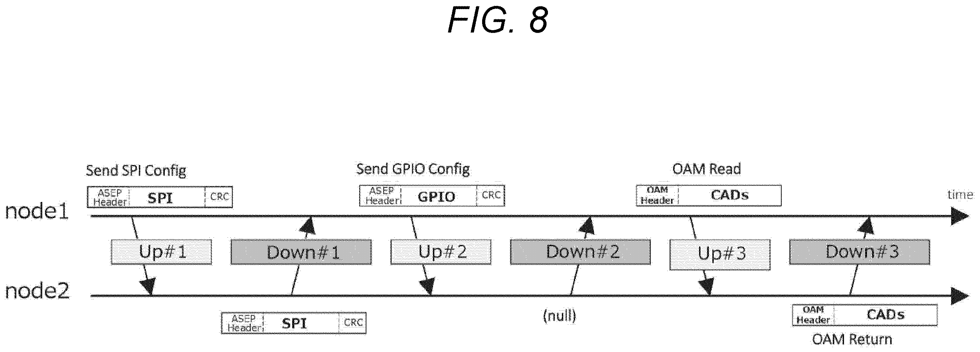

Fig. 7 is a diagram illustrating a transmission schedule between the Root device (15) located in the node1 and the Leaf device (115) located in the node2. Fig. 8 is a diagram illustrating transmission timings of a plurality of packets to be transmitted and received by the Root device (15) located in the node1 and the Leaf device (115) located in the node2 according to the transmission schedule in Fig. 7.

The ECU (10) transmits SPI or GPIO Config information to the node2 via the node1. In Uplink#1 of Fig. 8, the node1 transmits an application packet (Fig. 4A (A)) including SPI Config information to the node2. Fig. 8 illustrates an example in which the node2 normally receives the application packet including SPI Config information.

The node2 writes SPI Config information from the received application packet (Fig. 4A (A)) to the PEnc#2 (80) and the PDec#2 (82), which perform SPI protocol conversion.

In Downlink#1, the node2 transmits an application packet (Fig. 4A (A)) including SPI data as a response to the node1.

In Uplink#2, the node1 transmits an application packet (Fig. 4A (A)) including GPIO Config information to the node2. Fig. 8 illustrates an example in which the node2 normally receives the application packet including GPIO Config information.

The node2 writes GPIO Config information from the received application packet (Fig. 4A (A)) to the PEnc#2 (90) and the PDec#2 (92), which perform GPIO protocol conversion.

In Downlink#2, since there is no data of the GPIO signal to be transmitted, the PEnc#2 (90) of the node2 transmits null data to the node1.

The ECU (10) confirms that the node2 has been able to normally receive SPI and GPIO Config information via the node1.

In Uplink#3, the node1 transmits, to the node2, the read address of the register for confirming whether or not an FEC error has occurred in the node2 at the time of Config writing as an OAM read command of the OAM packet (Fig. 4B (A)).

In Downlink#3, the node2 includes the register value of the read address specified in CAD of the OAM read from the received OAM packet (Fig. 4B (A)) in the OAM packet (Fig. 4B (A)) as an OAM return and transmits the OAM packet to the node1.

The ECU (10) checks the result of the OAM return received by the node1 and confirms the Error status at the time of Config writing by the node2. If no Error information is included, the ECU (10) determines that the node2 has normally received Config information, and can proceed to the next processing.

A control register (17) in the controller (16) includes schedule data that designates the data transmission order of Root (node1). The DLL register (57) includes information necessary for generating the OAM header of the OAM packet (Fig. 4B (A)).

The controller (16) reads the information necessary for generating the OAM header from the DLL register (57) and transmits the information to the PEnc#0 (50).

In the example of node1.tx in Fig. 7, the controller (16) writes schedule data circulating in the order of 1. SPI, 2. GPIO, and 3. OAM included in the control register (17) and the writing data length of the schedule data to a schedule table (58-3).

The controller (16) sends a count start signal to a counter (58-4) that controls the transmission packet order indicated in the schedule table, and the schedule table (58-3) sends, to an Mux (58-2), a selection signal circulating in the order of 1. SPI, 2. GPIO, and 3. OAM according to a value from the counter (58-4).

The Mux (58 -2) transmits the application packet (Fig. 4A (A)) or the OAM packet (Fig. 4B (A)) received from the corresponding PEnc to a container constructor (58-1) according to the selection signal from the schedule table (58-3).

The container constructor (58-1) packs the packets received from the Mux (58-2) into the container (Fig. 4A (C)) and transmits the container to the node2 via the PhyL (100).

The controller (116) in the Leaf device (115) performs configuration of a container de-constructor (69-1). The container de-constructor (69-1) extracts the application packet (Fig. 4A (A)) or the OAM packet (Fig. 4B (A)) included in the container payload of the container (Fig. 4A (C)) received from the PhyL (300) and sends the application packet or the OAM packet to a DeMux (69-2).

The DeMux (69-2) transmits the received application packet (Fig. 4A (A)) or OAM packet (Fig. 4B (A)) to the corresponding PDec. As a result, for example, the DeMux (69-2) of node2.Rx that has received the transmission data of the node1.Tx in Fig. 7 transmits the application packet of Application#2 (SPI) to the PDec#2 (82) in Uplink#1, transmits the application packet of Application#3 (GPIO) (Fig. 4A (A)) to the PDec#3 (92) in Uplink#2, and transmits the OAM packet (Fig. 4B (A)) to the PDec#0 (62) in Uplink#3.

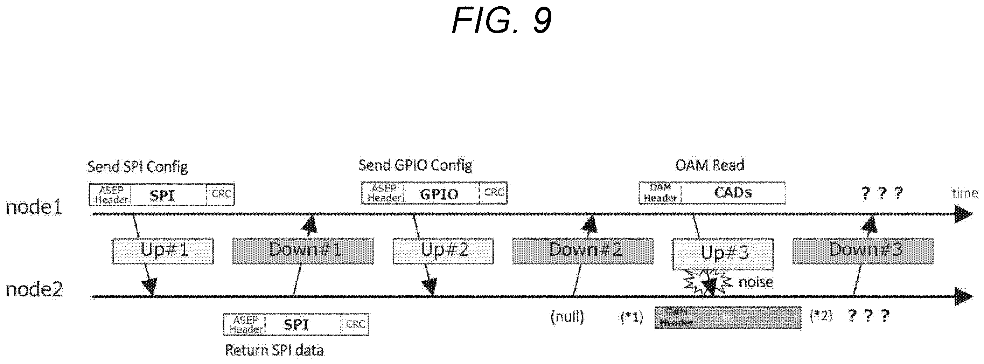

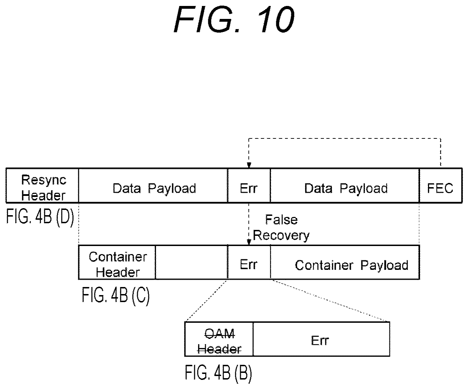

Fig. 9 is a diagram illustrating a problem when an OAM packet of Uplink#3 in Fig. 8 is transmitted from the node1 to the node2; Fig. 10 is a diagram illustrating an example in which an error on which error correction cannot be performed is included in the payload of the transmission signal received by the PhyL (300) of the node2.

In a case where an error exceeding the FEC correction capability occurs in the data payload portion of the PHY format (Fig. 4A (D)) received by the PhyL (300) of the node2, the PDec#0 (62) of Uplink#3 receives an OAM packet (Fig. 4B (A)) that has been erroneously corrected (* 1).

In the communication protocol conforming to the existing ASA, an OAM packet (Fig. 4B (A)) has no error detection function. Therefore, the PDec#0 (62) cannot determine whether or not the data of the received OAM packet (Fig. 4B (A)) is correct. As a result, in Downlink#3, there is a possibility that the OAM unit (65) makes an inappropriate response to the node1 (*2).

### (First Embodiment)

A communication system (3) according to a first embodiment can solve the problems (hereinafter, a first problem) illustrated in Figs. 9 and 10. The communication system (3) according to the first embodiment has a block configuration similar to that in Fig. 1, and the Root device (15) and the Leaf device (115) have block configurations similar to those in Figs. 2 and 3, respectively. Note that, as described later, the block configurations of the Root device (15) and the Leaf device (115) according to the first embodiment may be different from those in Figs. 2 and 3.

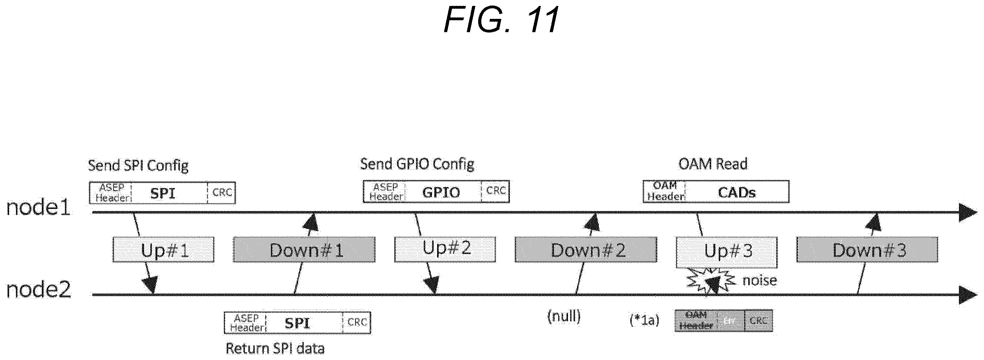

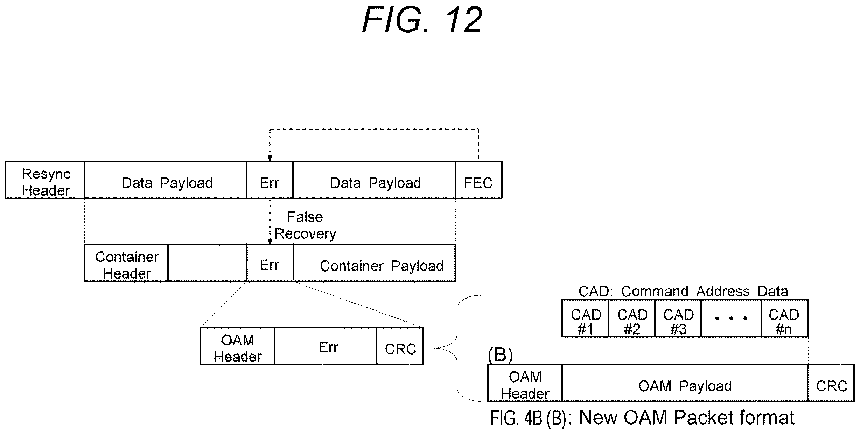

Figs. 11 and 12 are diagrams illustrating a first example for solving the first problem illustrated in Figs. 9 and 10. Fig. 11 is a diagram illustrating timings at which the Root device (15) located in the node1 and the Leaf device (115) located in the node2 transmit and receive an application packet and an OAM packet. Fig. 12 is a diagram illustrating a configuration of the OAM packet according to the first embodiment.

The OAM packet according to the first embodiment has CRC at the end of the payload, as shown in Fig. 12. The PDec#0 (62) can detect an error of the OAM packet on the basis of the CRC included in the OAM packet input to the DLL (66) (*1a). Therefore, an error included in the OAM packet received from the Root device (15) can be detected by the Leaf device (115).

In the example in Fig. 11, even if the Leaf device (115) can detect that there is an error in the OAM packet transmitted from the Root device (15) to the Leaf device (115), there is no function of notifying the Root device (15). Therefore, such a function may be added.

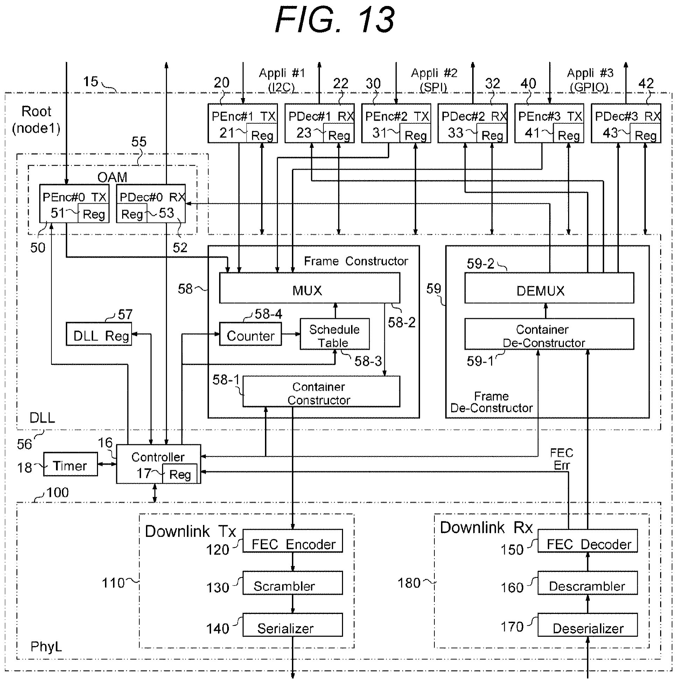

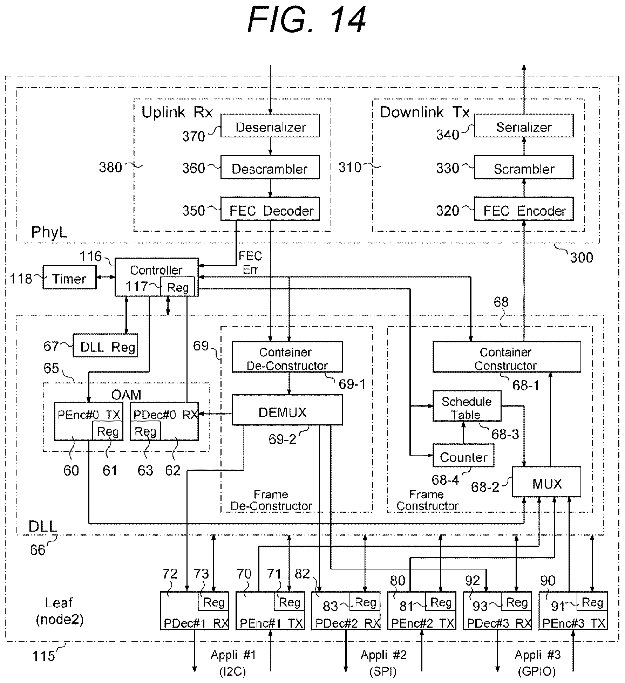

Fig. 13 is a block diagram illustrating an internal configuration of the Root device (15) according to the first embodiment, and Fig. 14 is a block diagram illustrating an internal configuration of the Leaf device (115) according to the first embodiment. In Figs. 13 and 14, components common to those in Figs. 2 and 3 are denoted by the same reference numerals, and differences will be mainly described below.

In the Root device (15) in Fig. 13, when an error is detected in an FEC Decoder (150) in the Downlink Rx (180) of the PhyL (100), the FEC Decoder (150) sends an error detection signal FEC Err to the controller (16). The controller (16) stores, in the DLL register (57), the number of times an error is detected in the FEC Decoder (150) on the basis of the error detection signal FEC Err. Specifically, the DLL register (57) is provided with an OAM DEC Error Reg that stores the number of times of error detection of the OAM packet.

Similarly, in the Leaf device (115) in Fig. 14, when an error is detected in an FEC Decoder (350) in the Uplink Rx (380) of the PhyL (300), the FEC Decoder (350) sends an error detection signal FEC Err to the controller (116). The controller (116) stores, in the DLL register (67), the number of times an error is detected in the FEC Decoder (350) on the basis of the error detection signal FEC Err.

The PhyL (100) in the Root device (15) in Fig. 13 and the PhyL (300) in the Leaf device (115) in Fig. 14 receive a transmission signal conforming to a predetermined communication protocol from a communication partner device, and perform error correction on a plurality of first packets included in the transmission signal. The plurality of first packets includes, for example, at least one of an application packet or an OAM packet. In the present specification, the OAM packet included in the plurality of first packets may be referred to as a first OAM packet.

The DLL (66) in the Leaf device (115) in Fig. 14 separates the plurality of first packets after the error correction and generates a second packet including error correction impossible information of the first packet on which the error correction cannot be correctly performed. The second packet is, for example, an OAM return. In the present specification, the OAM return may be referred to as a second OAM packet. The error correction impossible information is information including a time when an FEC error first occurred, the number of times of the FEC error, and the like, when the FEC error indicating that the error correction cannot be performed by the FEC Decoder occurs.

The DLL (66) in the Leaf device (115) includes the DLL register (67) that stores the error correction impossible information. The first OAM packet transmitted by the Root device (15) includes address information of the DLL register (67) in which the error correction impossible information is stored.

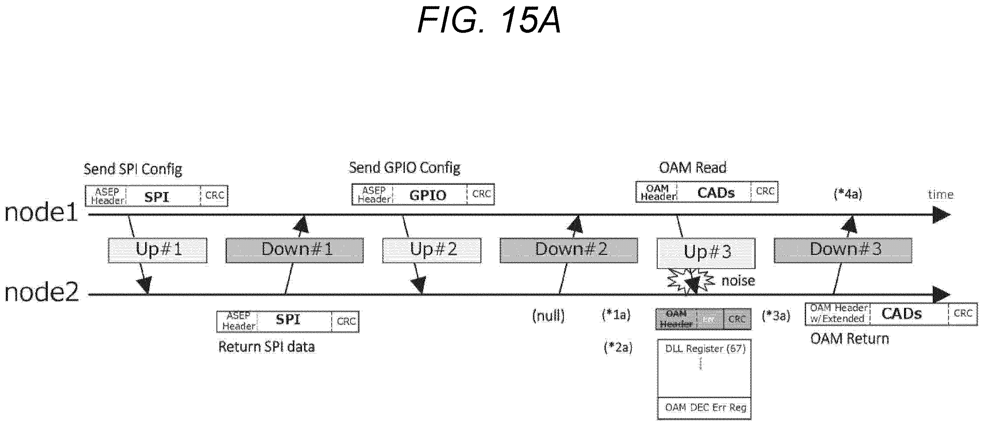

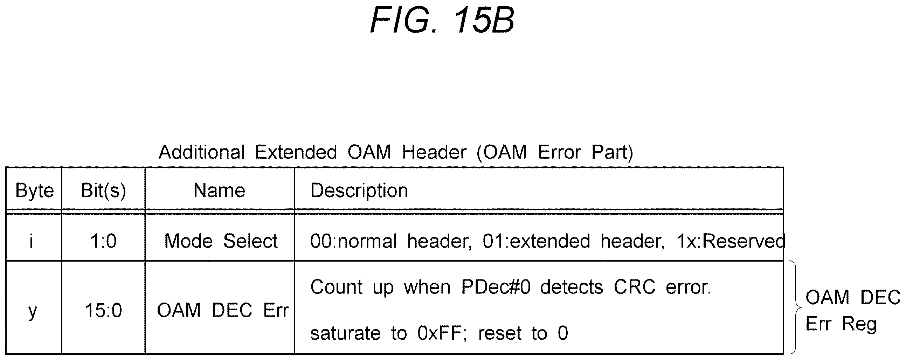

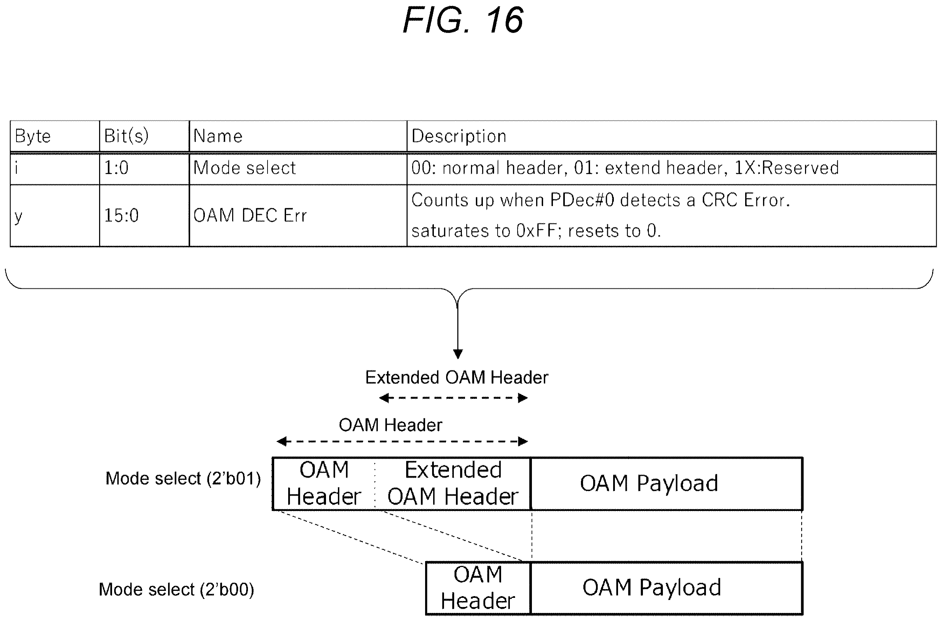

Figs. 15A, 15B, and 16 are diagrams illustrating a second example for solving the first problem illustrated in Figs. 9 and 10. In Uplink#3, the PDec#0 (62) detects an error in the OAM packet on the basis of the CRC included in the OAM packet (Fig. 4B (A)). When an error is detected (*1a), the PDec#0 (62) sends an error detection signal FFC Err to the DLL (66). The DLL (66) counts up the value of the OAM DEC Error Reg in the DLL register (67) (*2a).

In Downlink#3, the DLL (66) in the node2 generates an OAM packet (hereinafter, referred to as OAM return) for the node1 via the PEnc#0 (60). In a case where the node2 transmits the OAM return, which is a response to the node1, an OAM packet including an extended OAM header in which the register value of the OAM DEC Err Reg of the PDec#0 (62) is added to the existing OAM header of the OAM packet is generated (*3a in Figs. 15A and 15B). The ECU (10) can determine whether or not the OAM read received by the Leaf device (115) located in the node2 normally operates from the value of the OAM DEC Err Reg included in the OAM header received by the Root device (15) located in the node1 (*4a) .

Figs. 15B and 16 illustrate a first configuration example of the extended OAM header. The i-th byte of the extended OAM header is mode selection. The OAM header is the normal OAM header when Bit [1:0] is 00, and is the extended OAM header when Bit [1:0] is 01. 1X is reserved. The subsequent y bytes are information of the extended OAM header, and Bit [15:0] of each byte is the number of times of error detection counted up each time the PDec#0 detects an error. The number of times is saturated at 0xFF, and returns to zero by reset.

As illustrated in Fig. 16, in a case where the extended OAM header is used, the byte length is longer than that of the normal header.

In a case where the Leaf device (115) returns an OAM packet to the Root device (15) located in the node1 with an OAM return by using the extended OAM header, the Root device (15) can grasp that an error occurs in the OAM packet previously sent to the Leaf device (115), and can grasp the number of OAM packets in which the error occurs.

As described above, in the first embodiment, since CRC is added to the payload of the OAM packet and the OAM packet is transmitted, an error of the OAM packet can be detected on the basis of the CRC on the side that receives the OAM packet. Furthermore, the OAM DEC Error Reg is provided in the DLL register (67) of the DLL (66) to store the number of times of error detection of the OAM packet. The value of the OAM DEC Error Reg is recorded in the extended OAM header when the OAM packet is returned in the OAM return. Therefore, the Root device (15) that has received the OAM packet of the OAM return can grasp that the Leaf device (115) has detected the error of the OAM packet previously transmitted to the Leaf device (115) and the number of times of detection of the error.

### (Second Embodiment)

In the communication system (3) conforming to the existing ASA, when an application packet is transmitted from the Root device (15) located in the node1 to the Leaf device (115) located in the node2, even if an FEC error occurs in the Leaf device (115), there is a problem in that the Root device (15) does not notice the FEC error (hereinafter, a second problem). Hereinafter, the second problem will be described.

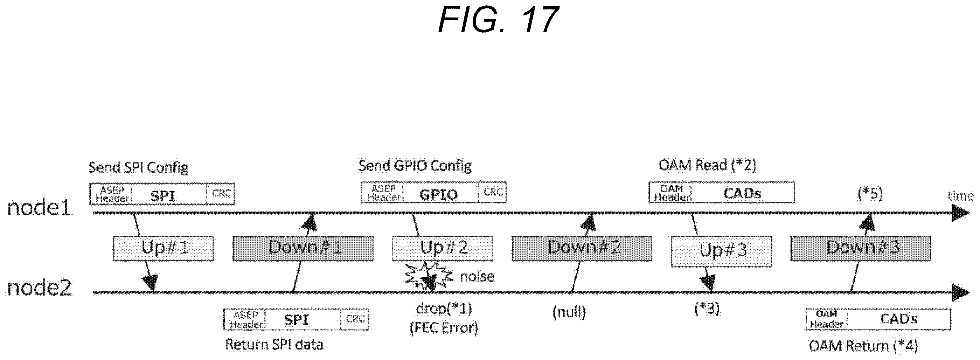

Fig. 17 is a diagram illustrating an example in which an FEC error occurs. The FEC error indicates that an error on which error correction cannot be performed occurs in the PDec in the Leaf device (115) .

Fig. 17 illustrates an example in which an FEC error occurs in the Leaf device (115) while an application packet is transmitting from the Root device (15) located in the node1 to the Leaf device (115) located in the node2 in an order similar to that in Fig. 7.

Since the operations of Uplink#1 and Downlink#1 in Fig. 17 are the same as those in Fig. 8, description thereof is omitted. In Uplink#2, the node1 transmits an application packet (Fig. 4A (A)) including GPIO Config information to the node2. At this time, it is assumed that an influence of noise or the like is received during transmission. In the PhyL (300) of the node2, an FEC error occurs when the data payload of the received PHY format (Fig. 4A (D)) exceeds the error correction limit of the FEC. In this case, the PhyL (300) discards the data payload in which the FEC error has occurred. Therefore, the application packet including GPIO Config information does not reach the PDec#3 (92) (*1).

In Downlink#2, since there is no register for recording occurrence information of the FEC error in the node2, the node2 cannot notify the node1 that the FEC error has occurred in the node2. Since there is no response data to be transmitted, the node2 transmits null data to the node1.

In Uplink#3, the ECU (10) transmits, via the node1, an OAM packet (Fig. 4B (B)) including an OAM read command for confirming whether the node2 has been able to normally receive SPI and GPIO Config information to the node2 (*2). The node2 receives the OAM packet (Fig. 4B (B)) including the OAM read command (*3).

In Downlink#3, the node2 stores the register value of the read address specified in CAD of the OAM read from the received OAM packet (Fig. 4B (A)) in the OAM payload (Fig. 4B (B)) of an OAM return and transmits the OAM packet to the node1 (*4).

The ECU (10) checks the result of the OAM return received by the node1 and confirms the Error status at the time of Config writing by the node2. If no Error information is included, the node2 has normally received Config information, and the ECU (10) can proceed to the next processing.

However, in the example in Fig. 17, since there is no register that records the occurrence information of the FEC error in the node2, information of the FEC error cannot be included in the OAM return. Therefore, the ECU (10) cannot grasp the accurate state of the node2 due to the lack of information even by checking the information included in the OAM return received by the node1 (*5).

As described above, in the communication system (3) in Fig. 1 conforming to the existing ASA, there is a problem (second problem) in that there is no means for notifying the node1 of the information of the FEC error occurred in the node2.

A communication system (3) according to the second embodiment can solve the above-described second problem. The Root device (15) in the communication system (3) according to the second embodiment has a block configuration similar to that in Fig. 13, and the Leaf device (115) has a block configuration similar to that in Fig. 14.

A 1st FEC Err Time Reg and an FEC Err Count Reg are newly added to the DLL register (67) of the Leaf device (115) located in the node2. The 1st Err Time Reg is a register that stores reception time information of an application packet on which error correction cannot be performed first in a transmission unit of a transmission signal. The FEC Err Count Reg is a register that stores total number information of application packets on which error correction cannot be performed in the transmission unit.

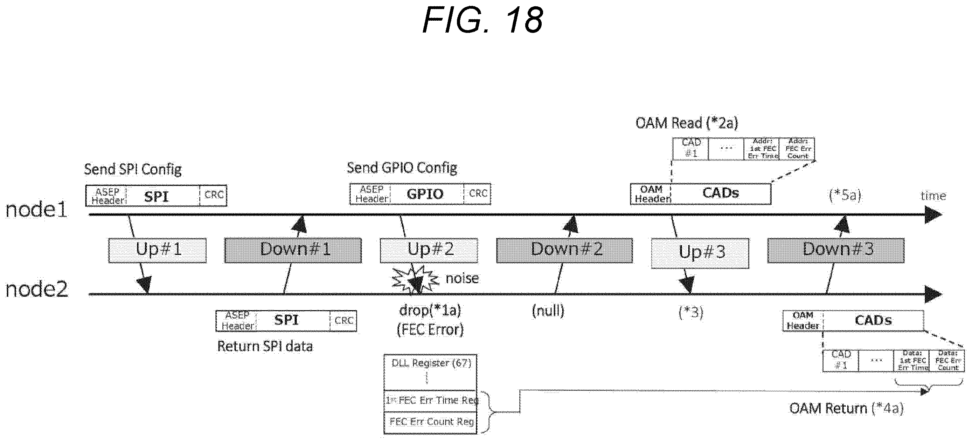

Fig. 18 is a diagram illustrating a first example for solving the above-described second problem. Fig. 18 illustrates an example in which an FEC error occurs at the node2 when application packets are transmitted from the node1 to the node2 in an order similar to that in Fig. 17 and a GPIO packet is transmitted.

The new registers (1st FEC Err Time Reg) and (FEC Err Count Reg) are added to the DLL register (67) of the node2, and the values of the newly added registers are added to the OAM payload in the OAM return to be transmitted to the node1.

In Uplink#2, in the PhyL (300) of the node2, an FEC error, which exceeds the error correction limit of the FEC, occurs in the data payload of the received PHY format (Fig. 4A (D)). In this case, the PhyL (300) discards the data payload in which the FEC error has occurred, and notifies the controller (116) that the FEC error has occurred.

The controller (116) notifies the DLL (66) that the FEC error has occurred, and the DLL (66) writes the occurrence time of the FEC error in the 1st FEC Err Time Reg of the DLL register (67) in the case of the first FEC error, and does not overwrite the occurrence time in the case where the occurrence time of the FEC error has already been written in the 1st FEC Err Time Reg. In addition, the DLL (66) counts up the FEC Err Count Reg of the DLL register (67) each time an FEC error occurs (*1a).

In Uplink#3, the ECU (10) transmits, via the node1, an OAM packet (Fig. 4B (A)) including an OAM read command for confirming whether the node2 has been able to normally receive SPI and GPIO Config information to the node2.

The OAM payload of the OAM packet (Fig. 4B (A)) includes an OAM read command and a Read Address indicating the 1st FEC Err Time Reg and the FEC Err Count Reg newly added to the DLL register (67) of the node2 (*2a).

In Downlink#3, the node2 reads each register value including the 1st FEC Err Time Reg and the FEC Err Count Reg of the DLL register (67) according to the read address of the OAM read received from the node1. The node2 adds the read register value as CAD to the OAM payload of the OAM return and transmits the OAM return to the node1 (*4a). The OAM read (first OAM packet) may include n pieces of first address information specifying n pieces of reception time information in the register and second address information specifying total number information in the register.

From the OAM return received by the node1, the ECU (10) can know the number of times of FEC errors that have occurred in the node2 and the first FEC error occurrence time, and the ECU (10) recognizes that only config information of GPIO needs to be sent to the node2 (*5a).

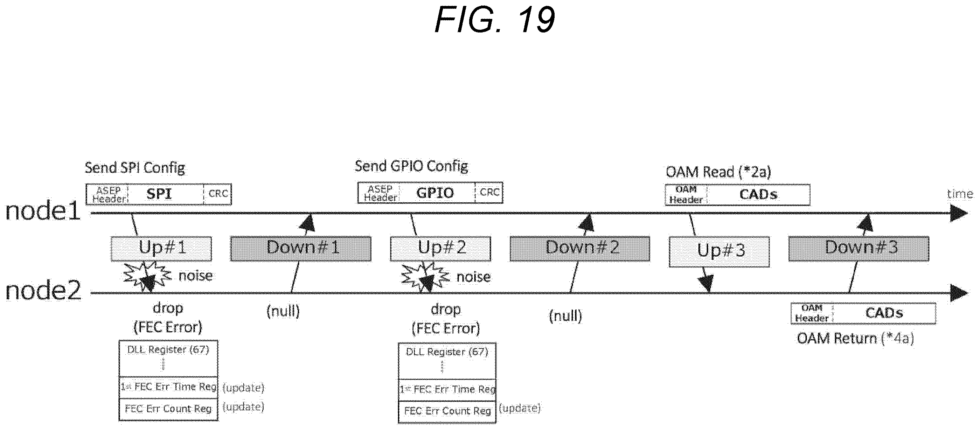

Fig. 19 is a diagram illustrating a second example for solving the second problem. In the second example, an FEC error occurs in Uplink#1 and Uplink#2.

In Uplink#1 in which the first FEC error has occurred, the time when the first FEC error occurred in Uplink#1 is recorded in the 1st FEC Err Time Reg, and the FEC Err Count is counted up to one. In Uplink#2 in which the next FEC error has occurred, since the time of Uplink#1 has already been recorded in the 1st FEC Err Time Reg, the time of Uplink#2 is not recorded. However, the FEC Err Count is counted up to two.

In a case where the result of the DLL register (67) in Uplink#2 is transmitted to the node1 in Downlink#3, the ECU (10) recognizes that the node2 has not been able to receive an SPI application packet (Fig. 4A (A)) from the 1st FEC error Time.

Furthermore, it is recognized from the FEC error Count = 2 that there is a possibility that an FEC error occurs in addition to SPI, and the ECU (10) re-executes Config writing of the application set from the Error occurrence time (Uplink#1) to the read time (Uplink#3) by the OAM read command in the node2.

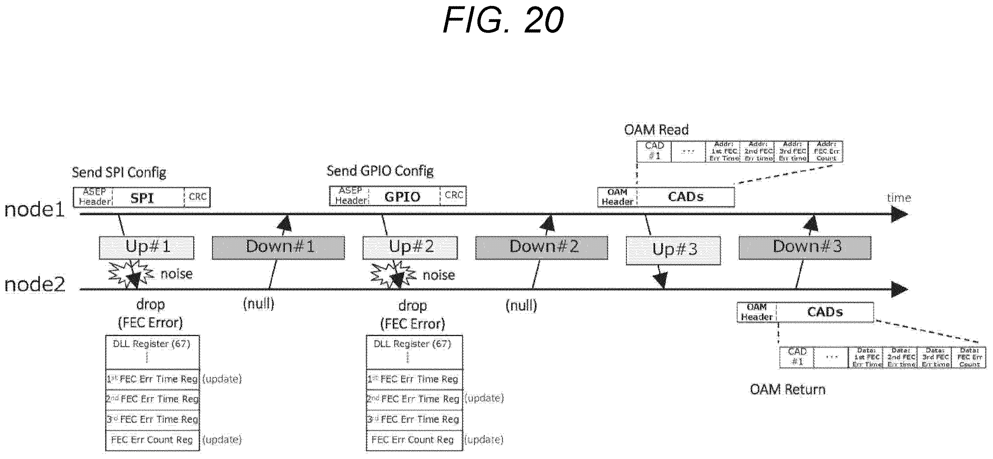

Fig. 20 is a diagram illustrating a third example for solving the second problem. In the third example, information stored in the DLL register (67) is different from that in Figs. 18 and 19. The DLL register (67) of the third example has three FEC Err Time Regs (1st FEC Err Time Reg, 2nd FEC Time Reg, 3rd FEC Time Reg). Note that how many FEC Err Time Regs are provided is optional. As a result, the time when the FEC error occurred can be recorded in the FEC Err Time Reg in the DLL register (67) three times from the first FEC error.

The node1 can read any register by the OAM read. In the present example, the 2nd FEC Err Time and the 3rd FEC Err Time are added to the DLL register (67) in Fig. 18.

The node1 also adds the addresses of the 2nd FEC Err Time and the 3rd FEC Err Time to the read address of the OAM read, so that the node2 also returns the register values of the 2nd FEC Err Time and the 3rd FEC Err Time to the node1 by the OAM return. The ECU (10) can know the first and second FEC error occurrence times (Uplink#1, Uplink#2) and the number of FEC errors (two times) from the result of the OAM return received by the node1.

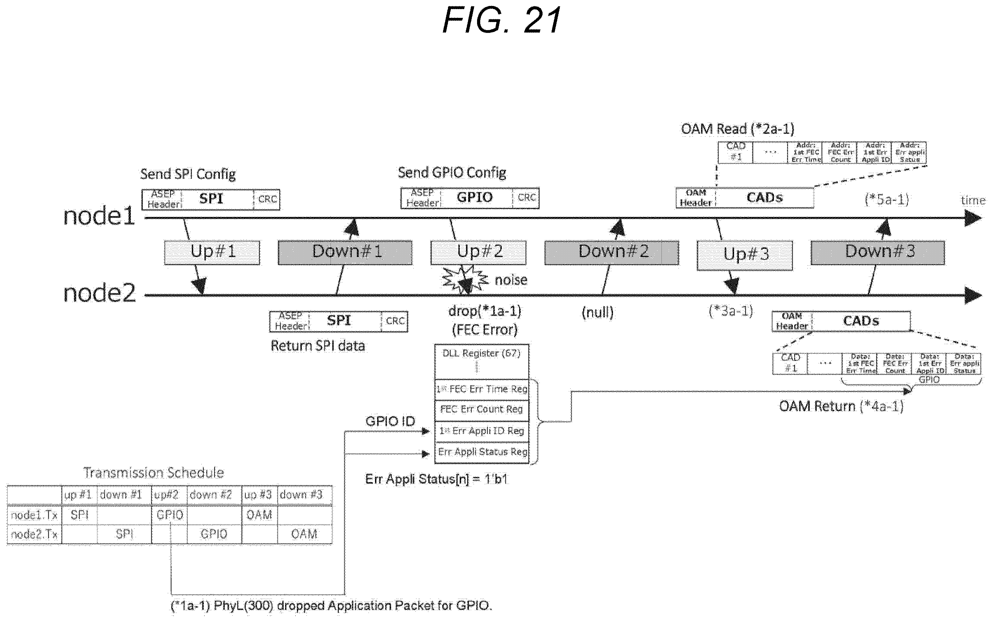

Fig. 21 is a diagram illustrating a fourth example for solving the second problem. In the fourth example, information stored in the DLL register (67) is different from that in Figs. 18 to 20.

In order for the node2 to know the application packet that have not been able to be received, the DLL (66) of the Leaf device (115) located in the node2 has a function of sharing the transmission schedule information illustrated in Fig. 7 of the Root device (15) located in the node1.

The DLL register (67) of the fourth example includes a 1st Err Appli ID reg and an Err Appli Status Reg in addition to the 1st FEC Err Time Reg and the FEC Err Count Reg. The 1st Err Appli ID Reg stores ID (identification number) of the application packet in which the first FEC error occurs. The Err Appli Status Reg includes bit information indicating whether or not an FEC error occurs in each application packet. An individual application packet is allocated to each bit of the Err Appli Status Reg, and whether or not an FEC error occurs in the corresponding application packet can be known by the value of each bit. These pieces of information are transmitted to the Root device (15) located in the node1.

The Root device (15) located in the node1 transmits an OAM read (first OAM packet) including first to fourth address information to the Leaf device (115) located in the node2. The first address information is address information designating the 1st FEC Err Time Reg. The second address information is address information designating the FEC Err Count Reg. The third address information is address information designating the 1st Err Appli ID reg. The fourth address information is address information designating the Err Appli Status Reg.

In the first to third examples described above, the ECU (10) needs to specify transmission content from the time when the FEC error included in the OAM return occurred. In contrast, in the fourth example, Application ID or Err Appli Status indicating that the FEC error has occurred can be directly provided to the ECU (10).

In Uplink#2 of Fig. 21, in the PhyL (300) of the node2, since an FEC error, which exceeds the error correction limit of the FEC, occurs in the data payload in the received PHY format (Fig. 4A (D)). Therefore, the FEC Decoder (350) of Fig. 14 discards the data payload in which the FEC error has occurred, and notifies the controller (116) that the FEC error has occurred.

The controller (116) notifies the DLL (66) that the FEC error has occurred, and the DLL (66) writes the occurrence time of the FEC error when the 1st FEC Err Time Reg of the DLL register (67) is in the initial state, and does not overwrite the occurrence time in a case where the occurrence time of the FEC error has already been written in the 1st FEC Err Time Reg. In addition, the DLL (66) counts up the FEC Err Count Reg of the DLL register (67) each time an FEC error occurs.

When an FEC error occurs, the DLL (66) refers to the shared transmission schedule (Fig. 7) of the node1 and specifies a time slot of an application packet of GPIO originally to be transmitted on the basis of the occurrence time of the FEC error. When the ID of the GPIO affected by the FEC error is specified, the DLL (66) writes and holds 1'b1 indicating an error flag in the corresponding bit of the FEC error status of the DLL register (67). In the present example, the Err Appli Status [3] is a bit indicating an ID of an application packet of GPIO.

The DLL (66) writes the ID (Error Application ID) of the application packet affected by an FEC error when the 1st Err Appli ID Reg of the DLL register (67) is in the initial state, and does not overwrite the Error Application ID in a case where the Error Application ID has already been written in the 1st Err Appli ID Reg (*1a-1).

In Uplink#3, as information for confirming whether the node2 has correctly received Config information, the node1 includes the read addresses of the 1st FEC Err Time Reg, the FEC Err Count Reg, the 1st Err Appli ID Reg, and the Err Appli Status of the node2 in the OAM payload of the OAM packet (Fig. 4B (A)) and transmits the OAM packet to the node2 (*2a-1). The node2 receives the OAM packet (Fig. 4B (A)) including the OAM read command (*3a-1).

In Downlink#3, the node2 reads each register value including the 1st FEC Err Time Reg, the FEC Err Count Reg, the 1st Err Appli ID Reg, and the Err Appli Status of the DLL register (67) according to the read addresses received from the node1.

The node2 adds the read register value as CAD to the OAM payload of the OAM return and transmits the OAM return to the node1 (*4a-1).

From the OAM return received by the node1, the ECU (10) can grasp the number of times of FEC errors that have occurred in the node2, the occurrence time of the first FEC error, and the affected application information (in the present example, the first FEC error occurs in GPIO) (*5a-1).

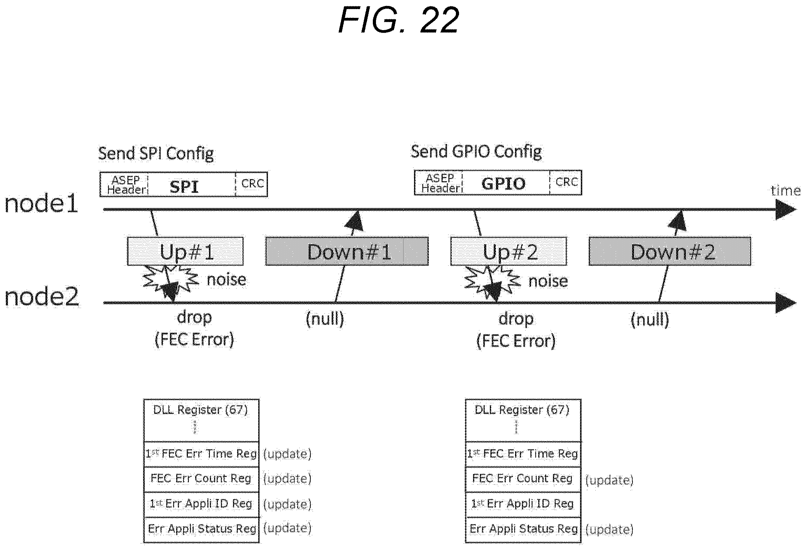

Fig. 22 is a diagram illustrating a fifth example for solving the second problem. The fifth example illustrates an example in which an FEC error occurs in Uplink#1 and Uplink#2. In Uplink#1, the time of Uplink#1 when the first FEC error occurred is recorded in the 1st FEC Err Time Reg, and the FEC Err Count Reg is counted up to one. The Application ID of SPI originally to be received by the node2 is recorded in the 1st Err Appli ID Reg, and 1'b1 is also recorded in the Err Appli Status [n] indicating SPI.

In Uplink#2, since the FEC error occurrence time of Uplink#1 has been already recorded in the 1st FEC Err Time Reg, the FEC error occurrence time of Uplink#2 is not recorded. However, the FEC Err Count Reg is counted up to two.

The Application ID of SPI to be received by Uplink#1 has been already recorded in the 1st Err Appli ID Reg, and therefore the GPIO ID of Uplink#2 is not recorded. However, 1'b1 is recorded in the Err Appli Status [m] indicating GPIO.

In a case where the result of the DLL register (67) of Uplink#2 is transmitted to the node1 in Downlink#3, the ECU (10) recognizes that Config transmission of SPI and GPIO has failed from the Err Appli Status [m:n] = 2'b11 and the FEC error Count = 2. Therefore, the ECU (10) is only required to re-execute Config writing of Application in which setting to the node2 has failed.

As described above, in the second embodiment, when the FEC error of the application packet is detected on the node2 side at the time of transmitting the application packet from the node1 to the node2, the 1st FEC Err Time Reg storing the time when the FEC error occurred first and the FEC Count Reg storing the number of FEC errors are provided in the DLL register (67). The values of these registers are sent to the node1 in an OAM packet. Therefore, in the node1, it is possible to grasp in which application packet the FEC error has occurred first and how many times the FEC error has occurred.

### (Third Embodiment)

In the second embodiment, FEC error information is included in the payload of the OAM packet of the OAM return. However, when the FEC error information is included in the payload, the payload is long, and it takes time and effort to read the payload on the node1 side. Furthermore, on the node1 side, it is necessary to include address information of the DLL register (67) that stores 1st FEC Err Time and FEC Err Count in the OAM read, and the number of issues of CAD is long.

Therefore, a communication system (3) according to the third embodiment returns the FEC error information from the node2 to the node1 by a simpler method than the second embodiment.

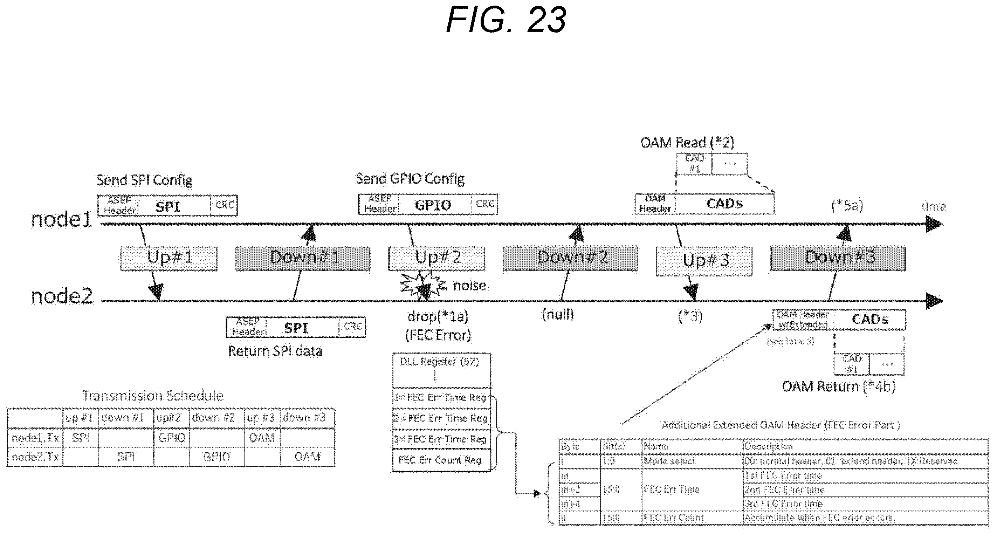

Fig. 23 is a diagram illustrating timings of the communication system (3) according to the third embodiment. Uplink#1, Downlink#1, and Uplink#2 are similar to those in Fig. 18 (*1a). Fig. 23 illustrates an example in which an FEC error occurs in a GPIO packet in the node2 in Uplink#2, the GPIO packet being transmitted from the node1.

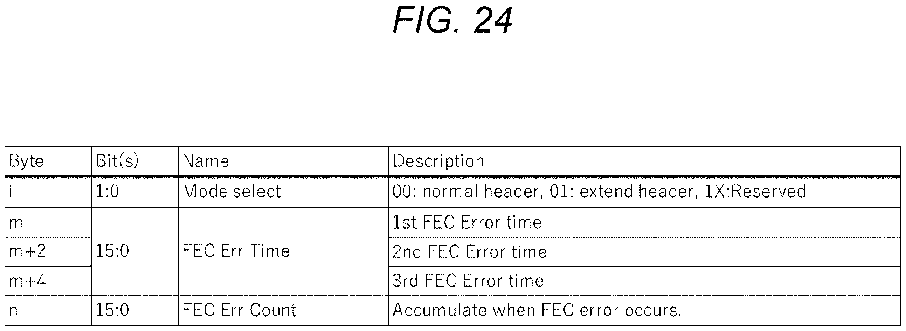

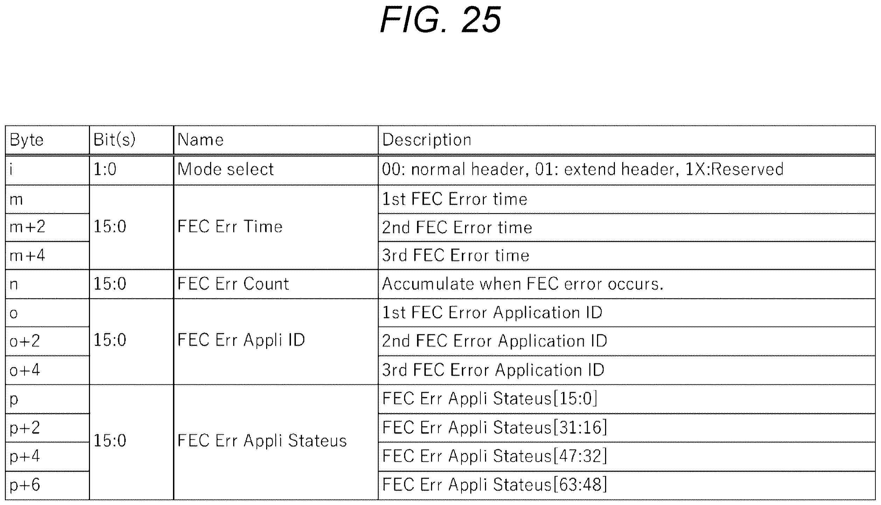

In the third embodiment, the OAM header of the OAM return is replaced with the extended OAM header. Figs. 24 and 25 are diagrams illustrating a second configuration example of the extended OAM header. As illustrated in Fig. 24, Bit [1:0] of the i-th byte is mode selection. The OAM header is the normal OAM header when Bit [1:0] is 00, and is the extended OAM header when Bit [1:0] is 01, and 1X is reserved. 1st FEC Error time is recorded in Bit [15:0] of the m-th byte. 2nd FEC Error time is recorded in Bit [15:0] of the (m + 2)-th byte. 3rd FEC Error time is recorded in Bit [15:0] of the (m + 4)-th byte. FEC Error Count is recorded in Bit [15:0] of the n-th byte.

In Fig. 25, the extended OAM header in Fig. 24 further includes FEC Error Application ID and FEC Error Application Status. 1st FEC Error Application ID is recorded in the o-th byte of the extended OAM header, 2nd FEC Error Application ID is recorded in the (o + 2)-th byte, and 3rd FEC Error Application ID is recorded in the (o + 4)-th byte. FEC Error Status [15:0] is recorded in the p-th byte of the extended OAM header, FEC Error Status [31:16] is recorded in the (p + 2)-th byte, FEC Error Status [47:32] is recorded in the (p + 4)-th byte, and FEC Error Status [63:48] is recorded in the (p + 6)-th byte.

In Uplink#3 of Fig. 23, the ECU (10) transmits an OAM packet (Fig. 4B (A)) to the node2 via the node1 (*2). The node2 receives the OAM packet (Fig. 4B (A)) including the OAM read command (*3).

In Downlink#3, the node2 reads the values of the 1st FEC Err Time Reg and the FEC Err Count Reg of the DLL register (67). The node2 inserts the read register values into the extended OAM header (extended OAM header), adds the value of the read register designated by CAD to the OAM payload, and transmits the OAM packet to the node1 (*4b) .

From the OAM return received by the node1 (115), the ECU (10) can know the number of times of FEC Errors that have occurred in the node2 and the first FEC Error occurrence time, and the ECU (10) recognizes that only config information of GPIO needs to be sent to the node2 (*5a).

As described above, in the third embodiment, since the FEC error information is returned to the node1 in the extended OAM header, it is not necessary to include the address information of the FEC error information in the OAM read transmitted by the node1 to the node2.

### (Fourth embodiment)

In a case where there is no transmission data of the application allocated to TDD time slot for each certain period, the DLL (66) has a function of allocating OAM instead. Therefore, the FEC error information can be returned by the OAM return immediately after the FEC error occurs.

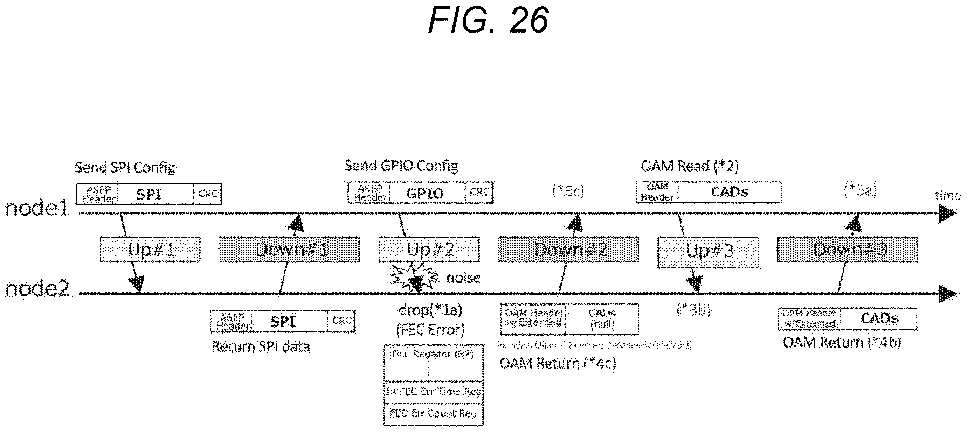

Fig. 26 is a timing chart of a communication system (3) according to the fourth embodiment. New registers (1st FEC Err Time Reg) and (FEC Err Count Reg) are added to the DLL register (67) of the node2, and the node2 has a function of transmitting the values of the additional registers to the node1 in the extended OAM header of the OAM packet. Any command in the OAM packet that transmits the extended OAM header may be used, but in the present example, the command is an OAM return.

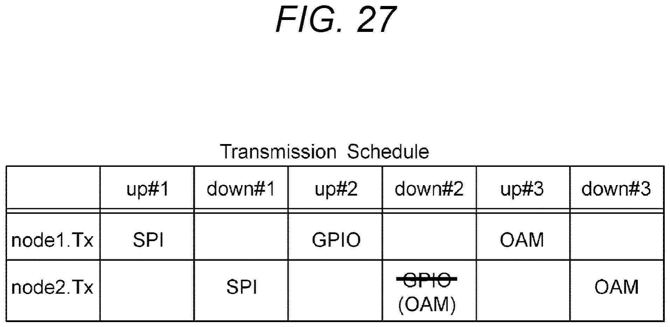

Uplink#1, Downlink#1, and UPlink#2 in Fig. 26 are similar to those in Fig. 18 (*1a). In Fig. 18, since there is no response data to be transmitted by the node2, null data is transmitted to the node1. On the other hand, in Fig. 26, in a case where there is no transmission data of the application allocated to the time slot of Downlink#2, the DLL (66) reallocates the time slot to OAM instead. Fig. 27 is a diagram illustrating a transmission schedule in which the allocation of Downlink#2 is changed from GPIO to OAM.

The DLL (66) inserts the read values of the 1st FEC Err Time Reg and the FEC Err Count Reg into the extended OAM header of the OAM return, adds an empty OAM Payload, and transmits the OAM packet to the node1. (*4c)

The ECU (10) reads the result of the OAM return received by the node1. The ECU (10) can know the number of times of FEC Errors that have occurred in the node2 and the first FEC Error occurrence time from the read result.

In the second and third embodiments, the FEC error information of the node2 is transmitted to the node1 by Downlink#3 after issuing the OAM read. However, in Fig. 26, the FEC error information of the node2 can be notified by Downlink#2 even when the OAM read is not issued. As a result, it is possible to notify the node1 that an FEC error has occurred in the node2 with lower latency than in the second and third embodiments (*5c).

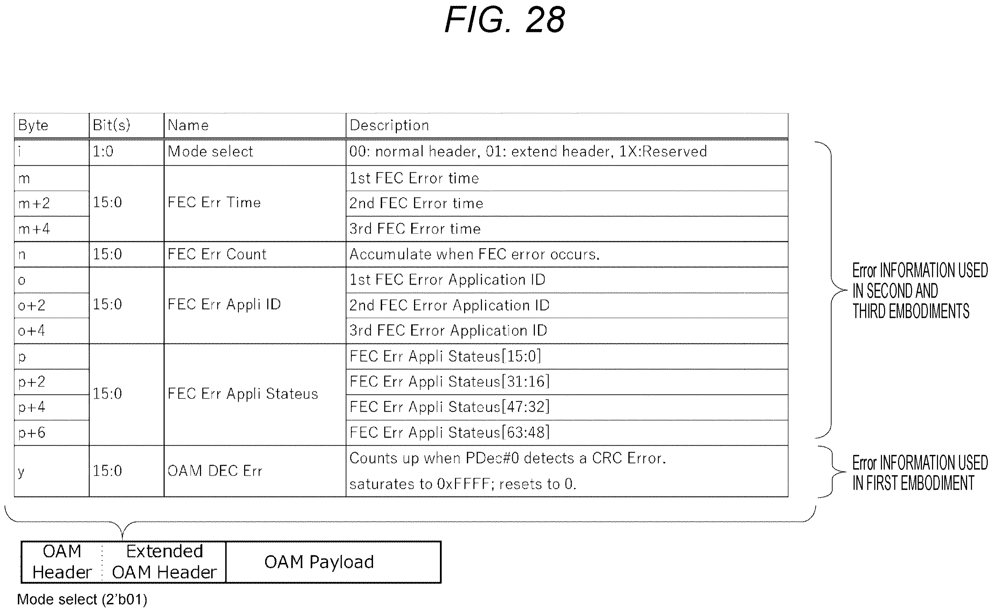

Fig. 28 is a diagram illustrating a configuration of the extended OAM header of the OAM return. The extended OAM header in Fig. 28 is the same as that in Fig. 25 except for the y-th bit. The y-th bit of the extended OAM header in Fig. 28 is OAM DEC Error that counts the number of times of FEC error detection. The number of times is saturated at 0xFFFF, and returns to zero by reset.

Although Fig. 26 illustrates the example in which the FEC error information is included in the extended OAM header of the OAM return, the FEC error information may be included in the OAM payload.

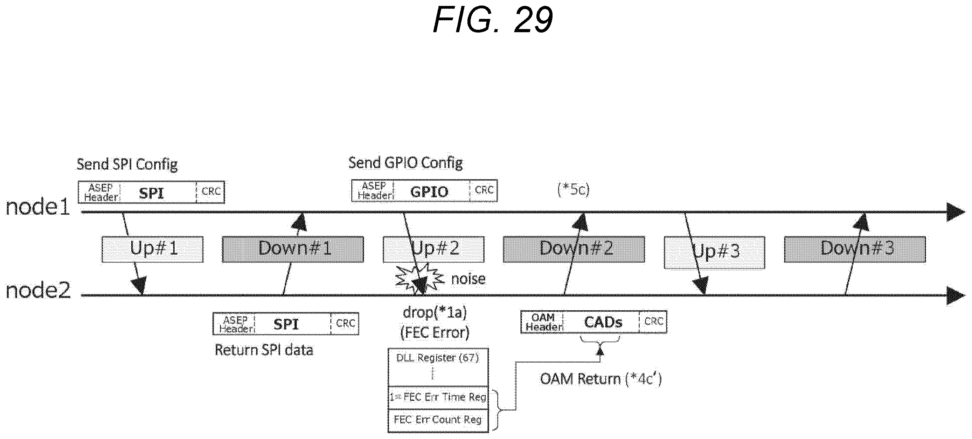

Fig. 29 is a timing chart in a case where the FEC error information is included in the OAM payload of the OAM return. Fig. 29 illustrates an example in which an FEC error occurs at the node2 when a GPIO packet is transmitted from the node1 to the node2 by Uplink#2. In the DLL register (67) in the DLL (66) of the node2, the 1st FEC Err Time Reg and the FEC Err Count Reg are provided. The values of these registers are included in the OAM payload of the OAM return and transmitted to the node1 in Downlink#2 (*4c').

As described above, in the fourth embodiment, since the FEC error information is returned from the node2 to the node1 in the OAM return immediately after an FEC error occurs, the node1 can quickly grasp that the FEC error has occurred.

Note that the present technology can have the following configurations.
(1) A communication device, including:
   a PHY that receives a first transmission signal conforming to a predetermined communication protocol from a communication partner device and performs error correction on a plurality of first packets included in the first transmission signal; and
   a LINK that separates the plurality of first packets after error correction and generates a second packet including error correction impossible information of a first packet on which error correction cannot be correctly performed, in which
   the PHY transmits a second transmission signal including the second packet to the communication partner device.
(2) The communication device according to (1), in which
   the plurality of first packets includes at least one of an application packet or a first operation, administration, and maintenance (OAM) packet, and
   the second packet includes a second OAM packet.
(3) The communication device according to (2), in which
   the LINK includes a register that stores the error correction impossible information, and
   the first OAM packet includes address information of the register in which the error correction impossible information is stored.
(4) The communication device according to (3), in which
   the second OAM packet includes a header and a payload, and
   the payload of the second OAM packet includes the error correction impossible information.
(5) The communication device according to (3) or (4), in which
   the error correction impossible information includes reception time information of an application packet on which error correction cannot be performed first in a transmission unit of the transmission signal and total number information of application packets on which error correction cannot be performed in the transmission unit, and
   the address information in the first OAM packet includes first address information designating the reception time information in the register and second address information designating the total number information in the register.
(6) The communication device according to (3) or (4), in which
   the error correction impossible information includes reception time information of first n (n is an integer of 1 or more) application packets in which error correction is impossible in a transmission unit of the transmission signal and total number information of application packets in which error correction is impossible in the transmission unit, and
   the address information in the first OAM packet includes the n pieces of first address information designating the n pieces of reception time information in the register and second address information designating the total number information in the register.
(7) The communication device according to (3) or (4), in which
   the error correction impossible information includes reception time information of an application packet on which error correction cannot be performed first in a transmission unit of the transmission signal, total number information of application packets on which error correction cannot be performed in the transmission unit, identification information of an application packet on which error correction cannot be performed first in the transmission unit of the transmission signal, and bit string information in which whether or not error correction cannot be performed is allocated to each application packet in units of bits, the application packet being transmitted in the transmission unit, and
   the address information in the first OAM packet includes: first address information designating the reception time information in the register; second address information designating the total number information in the register; third address information designating the identification information in the register; and fourth address information designating the bit string information in the register.
(8) The communication device according to any one of (3) to (7), in which
   the LINK includes an OAM unit that decodes the first OAM packet and generates the second OAM packet,
   the first OAM packet includes an error detection code, and
   the PHY detects an error in the first OAM packet on the basis of the error detection code and outputs an error detection signal.
(9) The communication device according to (8), further including
   a number storage unit that stores a number of times an error of the first OAM packet is detected by the OAM unit for each transmission unit of the transmission signal, in which
   the second OAM packet includes information of the number of times stored in the number storage unit.
(10) The communication device according to (9), in which
   the second OAM packet includes the error correction impossible information read from the number storage unit on the basis of the address information.
(11) The communication device according to any one of (2) to (10), in which
   the second OAM packet includes the error correction impossible information.
(12) The communication device according to (11), in which
   the second OAM packet includes a header and a payload,
   the payload of the second OAM packet includes the error correction impossible information, and
   the payload of the second OAM packet has a byte length according to an amount of the error correction impossible information.
(13) The communication device according to (10), in which
   the second OAM packet includes a header and a payload, and
   a length of the header of the second OAM packet is different between a case of including the error correction impossible information and a case of not including the error correction impossible information.
(14) The communication device according to any one of (2) to (13), in which
   the second OAM packet is transmitted to the communication partner device as a response to the first OAM packet from the communication partner device.
(15) The communication device according to any one of (2) to (14), in which
   the second OAM packet is transmitted to the communication partner device each time the PHY determines that error correction of the first packet is impossible.
(16) The communication device according to any one of (1) to (15), in which
   the plurality of first packets includes at least one of an I2C packet, an SPI packet, or a GPIO packet.
(17) The communication device according to any one of (1) to (16), in which
   information is alternately transmitted and received to and from the communication partner device within a period allocated by a time division duplex (TDD) communication method.
(18) A communication device, including:
   a LINK that generates a transmission packet including a plurality of first packets; and
   a PHY that generates a first transmission signal conforming to a predetermined communication protocol on the basis of the transmission packet, transmits the first transmission signal to a communication partner device, and receives a second transmission signal from the communication partner device, in which
   the LINK restores a second packet on the basis of the second transmission signal,
   the plurality of first packets includes at least one of an application packet or a first operation, administration, and maintenance (OAM) packet, and
   the second packet includes error correction impossible information of the first packet on which the communication partner device cannot correctly perform error correction.
(19) A communication system, including:
   a first communication device; and
   a second communication device that alternately transmits and receives information to and from the first communication device within a period allocated by a time division duplex (TDD) communication method, in which
   the first communication device includes:
      a first LINK that generates a first transmission packet including a plurality of first packets; and
      a first PHY that generates a first transmission signal conforming to a predetermined communication protocol on the basis of the first transmission packet, transmits the first transmission signal to the second communication device, and receives a second transmission signal from the second communication device,
      the second communication device includes:
         a second PHY that receives the first transmission signal conforming to the communication protocol from the first communication device and performs error correction on a plurality of first packets included in the first transmission signal; and
         a second LINK that separates the plurality of first packets after error correction and generates a second packet including error correction impossible information of a first packet on which error correction cannot be correctly performed, and
         the second PHY transmits the second transmission signal including the second packet to the first communication device.
(20) A communication method, including:
   receiving a first transmission signal conforming to a predetermined communication protocol from a communication partner device and performing error correction on a plurality of first packets included in the first transmission signal;
   separating the plurality of first packets after error correction and generating a second packet including error correction impossible information of a first packet on which error correction cannot be correctly performed; and
   transmitting a second transmission signal including the second packet to the communication partner device.

Aspects of the present disclosure are not limited to the above-described individual embodiments, but include various modifications that can be conceived by those skilled in the art, and the effects of the present disclosure are not limited to the above-described contents. That is, various additions, modifications, and partial deletions are possible without departing from the conceptual idea and spirit of the present disclosure derived from the matters defined in the claims and equivalents thereof.

### REFERENCE SIGNS LIST

- 3: Communication system
- 4: Cable
- 15: Device
- 16: Controller
- 17: Control register
- 18: Timer
- 55: OAM unit
- 57: Register
- 58: Frame constructor
- 58-1: Container constructor
- 58-3: Schedule table
- 58-4: Counter
- 65: OAM unit
- 67: DLL register
- 68: Frame constructor
- 69-1: Container de-constructor
- 110: Uplink Tx
- 115: Device
- 116: Controller
- 118: Timer
- 150: FEC Decoder
- 180: Downlink Rx
- 200: Camera
- 310: Downlink Tx
- 350: FEC Decoder
- 380: Uplink Rx

## Claims

1. A communication device, comprising:
a PHY that receives a first transmission signal conforming to a predetermined communication protocol from a communication partner device and performs error correction on a plurality of first packets included in the first transmission signal; and
a LINK that separates the plurality of first packets after error correction and generates a second packet including error correction impossible information of a first packet on which error correction cannot be correctly performed, wherein
the PHY transmits a second transmission signal including the second packet to the communication partner device.

2. The communication device according to claim 1, wherein
the plurality of first packets includes at least one of an application packet or a first operation, administration, and maintenance (OAM) packet, and
the second packet includes a second OAM packet.

3. The communication device according to claim 2, wherein
the LINK includes a register that stores the error correction impossible information, and
the first OAM packet includes address information of the register in which the error correction impossible information is stored.

4. The communication device according to claim 3, wherein
the second OAM packet includes a header and a payload, and
the payload of the second OAM packet includes the error correction impossible information.

5. The communication device according to claim 3, wherein
the error correction impossible information includes reception time information of an application packet on which error correction cannot be performed first in a transmission unit of the transmission signal and total number information of application packets on which error correction cannot be performed in the transmission unit, and
the address information in the first OAM packet includes first address information designating the reception time information in the register and second address information designating the total number information in the register.

6. The communication device according to claim 3, wherein
the error correction impossible information includes reception time information of first n (n is an integer of 1 or more) application packets on which error correction cannot be performed in a transmission unit of the transmission signal and total number information of application packets on which error correction cannot be performed in the transmission unit, and
the address information in the first OAM packet includes the n pieces of first address information designating the n pieces of reception time information in the register and second address information designating the total number information in the register.

7. The communication device according to claim 3, wherein
the error correction impossible information includes reception time information of an application packet on which error correction cannot be performed first in a transmission unit of the transmission signal, total number information of application packets on which error correction cannot be performed in the transmission unit, identification information of an application packet on which error correction cannot be performed first in the transmission unit of the transmission signal, and bit string information in which whether or not error correction cannot be performed is allocated to each application packet in units of bits, the application packet being transmitted in the transmission unit, and
the address information in the first OAM packet includes: first address information designating the reception time information in the register; second address information designating the total number information in the register; third address information designating the identification information in the register; and fourth address information designating the bit string information in the register.

8. The communication device according to claim 3, wherein
the LINK includes an OAM unit that decodes the first OAM packet and generates the second OAM packet,
the first OAM packet includes an error detection code, and
the PHY detects an error in the first OAM packet on a basis of the error detection code and outputs an error detection signal.

9. The communication device according to claim 8, further comprising
a number storage unit that stores a number of times an error of the first OAM packet is detected by the OAM unit for each transmission unit of the transmission signal, wherein
the second OAM packet includes information of the number of times stored in the number storage unit.

10. The communication device according to claim 9, wherein
the second OAM packet includes the error correction impossible information read from the number storage unit on a basis of the address information.

11. The communication device according to claim 2, wherein
the second OAM packet includes the error correction impossible information.

12. The communication device according to claim 11, wherein
the second OAM packet includes a header and a payload,
the payload of the second OAM packet includes the error correction impossible information, and
the payload of the second OAM packet has a byte length according to an amount of the error correction impossible information.

13. The communication device according to claim 10, wherein
the second OAM packet includes a header and a payload, and
a length of the header of the second OAM packet is different between a case of including the error correction impossible information and a case of not including the error correction impossible information.

14. The communication device according to claim 2, wherein
the second OAM packet is transmitted to the communication partner device as a response to the first OAM packet from the communication partner device.

15. The communication device according to claim 2, wherein
the second OAM packet is transmitted to the communication partner device each time the PHY determines that error correction of the first packet is impossible.

16. The communication device according to claim 1, wherein
the plurality of first packets includes at least one of an I2C packet, an SPI packet, or a GPIO packet.

17. The communication device according to claim 1, wherein
information is alternately transmitted and received to and from the communication partner device within a period allocated by a time division duplex (TDD) communication method.

18. A communication device, comprising:
a LINK that generates a transmission packet including a plurality of first packets; and
a PHY that generates a first transmission signal conforming to a predetermined communication protocol on a basis of the transmission packet, transmits the first transmission signal to a communication partner device, and receives a second transmission signal from the communication partner device, wherein
the LINK restores a second packet on a basis of the second transmission signal,
the plurality of first packets includes at least one of an application packet or a first operation, administration, and maintenance (OAM) packet, and
the second packet includes error correction impossible information of the first packet on which the communication partner device cannot correctly perform error correction.

19. A communication system, comprising:
a first communication device; and
a second communication device that alternately transmits and receives information to and from the first communication device within a period allocated by a time division duplex (TDD) communication method, wherein
the first communication device includes:
a first LINK that generates a first transmission packet including a plurality of first packets; and
a first PHY that generates a first transmission signal conforming to a predetermined communication protocol on a basis of the first transmission packet, transmits the first transmission signal to the second communication device, and receives a second transmission signal from the second communication device,
the second communication device includes:
a second PHY that receives the first transmission signal conforming to the communication protocol from the first communication device and performs error correction on a plurality of first packets included in the first transmission signal; and
a second LINK that separates the plurality of first packets after error correction and generates a second packet including error correction impossible information of a first packet on which error correction cannot be correctly performed, and
the second PHY transmits the second transmission signal including the second packet to the first communication device.

20. A communication method, comprising:
receiving a first transmission signal conforming to a predetermined communication protocol from a communication partner device and performing error correction on a plurality of first packets included in the first transmission signal;
separating the plurality of first packets after error correction and generating a second packet including error correction impossible information of a first packet on which error correction cannot be correctly performed; and
transmitting a second transmission signal including the second packet to the communication partner device.
